# EUROPÄISCHE PATENTSCHRIFT

(11) **EP 2 586 304 B1**
(45) Veröffentlichungstag und Bekanntmachung des Hinweises auf die Patenterteilung: **02.03.2016**
(21) Anmeldenummer: 12189567.6
(22) Anmeldetag: 23.10.2012
(51) Int. Cl.: A01M 7/00

(54) **Verfahren und Vorrichtung zum Bestimmen der Biomasse von Pflanzenbeständen und zum Regeln der Ausbringungsmenge von Spritzflüssigkeit**
Device and method for detecting the presence and amount of plants in an area and controlling an agricultural implement to minimize the use of spraying liquid
Dispositif et méthode pour détecter la présence de plantes dans une zone et de réguler un pulvérisateur de tel manière a minimiser l'utilisation de liquide phytosanitaire

(30) Priorität: 24.10.2011 DE 102011054742
(43) Veröffentlichungstag der Anmeldung: 01.05.2013
(73) Patentinhaber: Agri Con GmbH Precision Farming Company, 04749 Jahna (DE)
(72) Erfinder: Leithold, Peer, 04749 Jahna (DE)
(74) Vertreter: Carlsohn, Alexander

(56) Entgegenhaltungen:
- EP-A1- 2 186 405
- EP-A2- 1 978 433
- WO-A1-99/52354
- WO-A1-2008/151371
- DE-B3-102008 009 753
- US-A- 5 134 961

## Beschreibung

Die Erfindung betrifft ein Verfahren zur Einstellung der Ausbringungsmenge einer Substanz, die mittels eines Spritzgerätes auf Pflanzenbestände aufgebracht werden soll, in Abhängigkeit von der Biomasse der Pflanzenbestände. Sie betrifft ferner eine Vorrichtung zum Bestimmen der Biomasse von Pflanzenbeständen und/oder der Höhenführung von Spritzengestängen insbesondere an einer Landmaschine.

In der Landwirtschaft werden Spritzgeräte, auch als Feldspritzen bezeichnet, zum Aufbringen von Pflanzenschutzmitteln, Schädlingsbekämpfungsmitteln und Düngemitteln auf Pflanzenbestände seit langem genutzt. Die Feldspritzen weisen typischerweise ein Spritzengestänge auf. Die Spritzmaschine kann entweder ein eigenständiges, selbstfahrendes Fahrzeug sein, oder sie kann an einer Zugmaschine, beispielsweise einem Traktor, befestigt oder angehängt sein.

Das Austragen von Pflanzenschutzmitteln, Schädlingsbekämpfungsmitteln und Düngemitteln erfordert insbesondere aus wirtschaftlichen Gründen eine genaue Dosierung der Ausbringungsmenge. Dazu ist insbesondere bei Pflanzenschutzmitteln eine möglichst genaue Kenntnis der Biomasse der Pflanzenbestände erforderlich, auf die Pflanzenschutzmittel aufgetragen werden sollen. Die Bestimmung der Biomasse und die darauf abgestimmte Dosierung werden jedoch durch die Bewegung der Landmaschine erschwert. Ferner wird durch die Bewegung der Landmaschine das Erreichen einer hohen Treffgenauigkeit der Spritzmenge erschwert.

Aus DE 10 2008 009 753 B3 ist ein Verfahren zur Bestimmung der Biomasse von Pflanzenbeständen bekannt, bei dem die Biomasse von Pflanzenbeständen berührungslos während der Durchfahrt einer Landmaschine durch die Pflanzenbestände bestimmt werden kann. Dazu ist am Dach der Landmaschine ein Ausleger quer zur Bewegungsrichtung der Landmaschine befestigt. Zwei Ultraschallsensoren sind an den Enden des Auslegers befestigt. Die beiden Ultraschallsensoren richten ihre Schallkegel im Wesentlichen senkrecht auf den Pflanzenbestand, wobei die Abweichung zur senkrechten Ausrichtung höchstens 10° zum Nadir betragen darf. Der Abstand der Ultraschallsensoren zur Bodenoberfläche soll zwischen 2 und 4 m betragen. Alternativ schlägt DE 10 2008 009 753 B3 vor, zwei oder mehr Sensoren direkt auf dem Spritzengestänge zu montieren, und zwar so, dass sich die Schallkegel der Sensoren nicht gegenseitig beeinflussen. Schließlich wird in DE 10 2008 009 753 B3 ein Verfahren geschildert, mit dessen Hilfe die Biomasse unter Generierung eines Biomassemesssignals bestimmt werden kann. Mit Letzterem wird eine Feldspritze angesteuert, um Substanzen bedarfsspezifisch auf den Pflanzenbestand ausbringen zu können. Erforderlich dafür ist die Ermittlung eines als Biomassesignal bezeichneten Biomassewertes unter Verwendung situationsabhängiger Kalibrierfunktionen.

Es hat sich nun herausgestellt, dass das Verfahren zur Ermittlung der Biomasse eines Pflanzenbestandes für die Bemessung der situationsbezogenen Ausbringungsmenge von Substanzen wie Pflanzenschutzmitteln, Schädlingsbekämpfungsmitteln und Düngemitteln verbesserungsbedürftig ist. Aufgrund der Bewegung der Landmaschine ist es an sich unzweckmäßig, die Ultraschallsensoren am Spritzengestänge zu befestigen. Das Biomassesignal, das mittels dieser Sensoren gewonnen wird, wird mit einem zeitlichen Vorlauf benötigt, um die Dosiereinheiten der Feldspritze so einstellen zu können, dass die erwünschte Menge tatsächlich auch auf die Pflanzen trifft, deren Biomasse sich in dem Biomassesignal widerspiegelt. Dieses Ziel könnte auf den ersten Blick mit der Lösung erreicht werden, bei der die Sensoren an einem Ausleger auf dem Dach einer Landmaschine befestigt sind. Ist die Spritzmaschine am Heck einer vorwärtsfahrenden Landmaschine befestigt, so wird das Biomassesignal in einem ausreichenden zeitlichen Abstand erhalten, bevor die Dosierungseinheiten der Feldspritze den Abschnitt des Pflanzenbestandes passieren, für den das Biomassesignal ermittelt worden ist. Die räumliche Trennung zwischen den Sensoren auf dem Dach der Landmaschine und den Dosierungseinheiten der Spritzmaschine können jedoch zu Fehlern führen, die aus Abweichungen des Abstandes, längs und quer zur Fahrtrichtung, zwischen Sensoren und Dosierungseinheiten resultieren. Ändert sich dieser Abstand ohne eine Korrektur der erforderlichen Berechnungen, so wird die berechnete Menge an Substanzen nicht auf die Pflanzen aufgetragen, für die das Biomassesignal ermittelt worden ist und auf dem die Berechnung der Menge an Substanzen beruht. In diesem Fall ist der für die Biomassebestimmung erforderliche technische Aufwand jedoch vergeudet, da entweder zu viel oder zu wenig Substanz auf die Pflanzenbestände aufgetragen wird, so dass sich die Situation nicht wesentlich von einer bloßen Abschätzung der erforderlichen Menge durch einen Operator der Spritzmaschine unterscheidet.

EP 1 978 433 A2 offenbart ein elektrisches Überwachungs- und Einstellsystem für die Höhen- und Lageeinstellung eines Verteilergestänges. Das System umfasst Paare von Sensoren zur Messung des Abstandes des Verteilergestänges von der Bestandsoberfläche. Bei der Höhen- und Lageeinstellung werden nur Signale des Sensors eines Paares von Sensoren berücksichtigt, dessen Signale zuerst eingehen.

Aufgabe der Erfindung ist es, die Nachteile nach dem Stand der Technik zu beseitigen. Es soll insbesondere ein Verfahren zum Ausbringen einer Substanz, wie eines Pflanzenschutzmittels, eines Schädlingsbekämpfungsmittels und/oder eines Düngemittels, auf Pflanzenbestände mittels eines Spritzgerätes, das an einem mobilen Träger befestigt ist, angegeben werden, das eine verbesserte, vor allem eine situationsbezogene Ausbringung einer derartigen Substanz auf einen Pflanzenbestand ermöglicht. Ferner soll eine Vorrichtung angegeben werden, die eine verbesserte Ausbringung von Substanzen wie Pflanzenschutzmitteln, Schädlingsbekämpfungsmitteln und Düngemitteln auf Pflanzenbestände, insbesondere mittels des erfindungsgemäßen Verfahrens, ermöglicht.

Diese Aufgabe wird durch die Merkmale der Ansprüche 1 und 5 gelöst. Zweckmäßige Ausgestaltungen der Erfindungen ergeben sich aus den Merkmalen der Unteransprüche.

Nach Maßgabe der Erfindung ist ein Verfahren zum Ausbringen einer Substanz, wie eines Pflanzenschutzmittels, eines Schädlingsbekämpfungsmittels und/oder eines Düngemittels, auf Pflanzenbestände mittels eines Spritzgerätes vorgesehen, das an einem mobilen Träger befestigt ist und ein höhenverstellbares Spritzengestänge aufweist, an dem eine Vielzahl von Dosierungseinrichtungen für die Substanz sowie zumindest vier, gleichmäßig voneinander beabstandete Ultraschallsensoren befestigt sind, wobei während der Überfahrt des mobilen Trägers mittels der Ultraschallsensoren zyklisch Schallimpulse in Richtung des Pflanzenbestandes abgegeben werden und die von dem Pflanzenbestand und vom Boden reflektierten Echos erfasst werden. Das Verfahren umfasst:
(a) die zyklische Bestimmung des Abstandes zwischen den Ultraschallsensoren und der Oberfläche des Pflanzenbestandes (Bestandsoberfläche); und Höhenverstellung des Spritzengestänges, wenn der Abstand zwischen den Ultraschallsensoren und der Bestandsoberfläche von einem vorgegebenen Wert abweicht; und gleichzeitig
(b) die zyklische Bestimmung der Biomasse unter Erzeugung eines Biomassewertes, der ein Maß für die aktuelle Biomasse auf einem Bereich ist, der von Ultraschallsensoren abgetastet wird; Berechnung der Ausbringungsmenge an der Substanz, die auf den Pflanzenbestand dieses Bereiches ausgebracht werden soll, unter Erzeugung zumindest eines Steuersignals für die Dosierungseinrichtungen und Einstellen der Ausbringungsmenge der Substanz mittels der Dosierungseinrichtungen auf Basis des oder der Steuersignale; wobei
   - die zyklische Bestimmung des Abstandes zwischen den Ultraschallsensoren und der Oberfläche des Pflanzenbestandes (Bestandsoberfläche) in Schritt (a) anhand der Echos erfolgt, die innerhalb eines ersten Zyklus von den Ultraschallsensoren zeitlich zuerst empfangen werden;
   - die zyklische Bestimmung der Biomasse in einem zweiten Zyklus anhand aller Echos erfolgt, die innerhalb eines ersten Zyklus von den Ultraschallsensoren empfangen werden; und
   - für jeden Ultraschallsensor in jedem ersten Zyklus ein Wert für den Abstand zwischen dem Ultraschallsensor und der Bestandsoberfläche und ein Wert für den Abstand des Ultraschallsensors vom Boden berechnet wird.

Der Ausdruck "Boden" bezieht sich auf die Oberfläche des Erdreiches, auf dem sich der Pflanzenbestand befindet. Der Ausdruck "Bodenoberfläche" wird in der vorliegenden Erfindung synonym zum Ausdruck "Boden" verwendet.

Das Spritzengestänge trägt mindestens vier Ultraschallsensoren, die in vorgegebenen Abständen angeordnet sind. Bevorzugt sind die Ultraschallsensoren annähernd äquidistant voneinander beabstandet auf einer horizontalen Achse, quer zur Fahrtrichtung des mobilen Trägers, an dem Spritzengestänge befestigt. Mittels dieser vier oder mehr Ultraschallsensoren wird eine Erfassung der Biomasse in, gegenüber vorbekannten Systemen, bisher nicht erreichter räumlicher Auflösung erreicht. Hieraus resultiert das Potential einer hohen Präzision hinsichtlich der bestandsspezifischen Applikation von Substanzen wie Pflanzenschutzmitteln.

Eine Höhenverstellung des Spritzengestänges kann vorgenommen werden, indem aus den Abständen der Ultraschallsensoren von der Bestandsoberfläche eine oder mehrere Höhenwerte ermittelt werden. Ein Höhenwert ist erforderlich, wenn die Höhe des Spritzengestänges nur insgesamt verändert werden kann. In diesem Fall ist typischerweise nur ein Stellelement zur Höhenverstellung des Spritzengestänges vorhanden. Es sind jedoch auch Spritzengestänge bekannt, die separat ansteuerbare Abschnitte aufweisen, so dass die Höhe der Abschnitte unterschiedlich eingestellt werden kann. Dazu weist jeder Abschnitt ein gesondertes Stellelement auf. In diesem Fall kann vorgesehen sein, dass für jeden Abschnitt ein gesonderter Höhenwert berechnet wird und, falls dieser Höhenwert von einem vorgegebenen Wert abweicht, daraus ein Steuersignal erzeugt und an das Stellelement dieses Abschnittes übermittelt wird. Werden mehrere Höhenwerte berechnet, weil das Spritzengestänge separat ansteuerbare Abschnitte aufweist, so wird die Berechnung der Höhenwerte jeweils anhand der Messwerte vorgenommen, die von den Ultraschallsensoren stammen, die dem Abschnitt räumlich am nächsten liegen. Weist beispielsweise das Spritzengestänge, bezogen auf die Fahrtrichtung des mobilen Trägers, einen rechten und einen linken Abschnitt auf, deren Höhe separat eingestellt werden können, so werden für die Höhenführung des rechten Abschnittes die Ultraschallsensoren eingesetzt, die sich am rechten Abschnitt des Spritzengestänges befinden, während für die Höhenführung des linken Abschnittes die Ultraschallsensoren eingesetzt werden, die sich am linken Abschnitt des Spritzengestänges befinden.

Für die Einstellung der Ausbringungsmenge der Substanz mittels der Dosierungseinrichtungen können ein oder mehrere Steuersignale generiert werden. Nur ein Steuersignal ist erforderlich, wenn die Ausbringungsmenge an den Dosierungseinrichtungen mittels eines gemeinsamen Stellelementes, das die Ausbringungsmenge für alle Dosierungseinrichtungen bestimmt, eingestellt werden kann. Sind die Dosierungseinrichtungen jedoch in Gruppen zusammengefasst, die jeweils ein gesondertes Stellelement aufweisen, oder weist jede Dosierungseinrichtung ein eigenes Stellelement auf, so können für jedes dieser Stellelemente gesonderte Steuersignale generiert werden. Die Generierung dieser Steuersignale wird wiederum anhand der Messwerte vorgenommen, die von den Ultraschallsensoren stammen, die der jeweiligen Dosierungseinrichtung oder der jeweiligen Gruppe von Dosierungseinrichtungen räumlich am nächsten liegen.

Mittels der Ultraschallsensoren wird ein Schallimpuls in Richtung der Bestandsoberfläche ausgesendet, und anschließend werden über einen vorgegebenen Zeitraum, den Empfangszeitraum, die Echos empfangen. Die Höhenführung des Spritzengestänges soll auf dem, bezogen auf den jeweiligen Empfangszeitraum, zeitlich ersten Echo basieren, von welchem der Abstand des Spritzengestänges zur Bestandsoberfläche abgeleitet wird. Für die Berechnung der Biomassewerte sollen hingegen die Echos, die über die Gesamtdauer des jeweiligen Empfangszeitraums empfangen wurden, verwendet werden. Diese Echos ergeben den Abstand des Ultraschallsensors von der Bestands- sowie der Bodenoberfläche und ggf. von den Blattetagen wieder. Für die Berechnung des oder der Höhenwerte und für die Berechnung des oder der Biomassewerte können mehrere, zeitlich aufeinander folgende Empfangszeiträume verwendet werden.

Vorzugsweise umfasst daher die Erzeugung der Biomassewerte die Bestimmung des Abstandes der Ultraschallsensoren von der Oberfläche des Pflanzenbestandes (Bestandsoberfläche) und die Bestimmung des Abstandes der Ultraschallsensoren von der Bodenoberfläche. Ferner kann vorgesehen sein, dass die Berechnung der Biomassewerte die Bestimmung der Abstände der Ultraschallsensoren von den Blattetagen des Pflanzenbestandes umfasst. Das ist insbesondere dann zweckmäßig, wenn der Pflanzenbestand eine oder mehrere Blattetagen aufweist.

Es sind ein erster und ein zweiter Zyklus vorgesehen. Innerhalb des ersten Zyklus werden die Schallimpulse ausgesendet, die Echos über den Empfangszeitraum unter Erhalt von Messwerten empfangen, die Messwerte in Distanzen transformiert und schließlich aus der Distanz für das zeitliche erste Echo innerhalb des Empfangszeitraums ein Wert für den Abstand zwischen dem Ultraschallsensor und der Bestandsoberfläche und aus der Distanz für das letzte Echo des Empfangszeitraums ein Wert für den Abstand des Ultraschallsensors vom Boden und optional aus den Distanzen der übrigen Echos Werte für die Abstände des Ultraschallsensors von den Blattetagen berechnet. Aus den Werten für die Abstände werden schließlich in einem zweiten Zyklus der oder die Höhenwerte und der oder die Biomassewerte berechnet.

Erfindungsgemäß werden die Echos, die von den einzelnen Ultraschallsensoren empfangen werden, unabhängig voneinander ausgewertet, so dass für jeden Ultraschallsensor in jedem ersten Zyklus ein Wert für den Abstand zwischen dem Ultraschallsensor und der Bestandsoberfläche, ein Wert für den Abstand des Ultraschallsensors vom Boden und optional Werte für die Abstände des Ultraschallsensors von den Blattetagen erhalten werden. Dazu kann jeder Ultraschallsensor mit einer Auswerteeinheit verbunden sein, die von den anderen Auswerteinheiten für die anderen Ultraschallsensoren gesondert ist. Bei den Auswerteeinheiten kann es sich beispielsweise jeweils um eine Platine, d. h. um eine Trägerplatte und die auf dieser befindlichen elektronischen Bauelemente, handeln. Die Platinen können in einer Rechenbox gemeinsam betrieben werden. Das in DE 10 2008 009 753 B3 beschriebene System besitzt hingegen nur eine Signal- und Auswerteeinheit zum Verarbeiten der Messwerte. Somit geben die Ergebnisse nur die durchschnittliche Ausprägung des beobachteten Parameters innerhalb einer Arbeitsbreite wieder. Mit dem erfindungsgemäßen Verfahren werden die Signale der Sensoren separat verarbeitet, so dass die Informationen hinsichtlich der beobachteten Parameter räumlich wesentlich höher aufgelöst sind. Das ermöglicht eine höhere Treffgenauigkeit bei der bestandsspezifischen Applikation von Substanzen wie Fungiziden und Wachstumsregulatoren in Pflanzenbeständen wie z. B. Getreide. Überdies werden mit den Messwerten eines Ultraschallsensors mehrere Prozesse bei der Applikation einer Substanz gesteuert, nämlich die Höheneinstellung des Spritzengestänges und die Steuerung der Ausbringungsmenge an Substanz.

Alternativ kann vorgesehen sein, dass die Echos, die von den Ultraschallsensoren empfangen werden, unabhängig voneinander in einer gemeinsamen Auswerteeinheit ausgewertet werden. In diesem Fall kann die Auswerteeinheit, beispielsweise eine Platine, in die Datenverarbeitungsanlage integriert werden.

Die Distanzen, die in der oder den Auswerteeinheiten erhalten werden, werden zweckmäßigerweise an eine gemeinsame Datenverarbeitungsanlage übermittelt. Dort wird dann, nach dem Berechnen des oder der Höhenwerte sowie des oder der Biomassewerte, ein oder mehrere Steuersignale für die Höhenverstellung des Spritzengestänges und damit der Dosierungseinrichtungen und ein oder mehrere Steuersignale für die Dosierungseinrichtungen zur Einstellung der Ausbringungsmenge berechnet.

Zur Berechnung des oder der Steuersignale für die Dosierungseinrichtungen zum Einstellen der Ausbringungsmenge wird vorzugsweise aus den Biomassewerten zunächst die Substanzmenge berechnet, die auf den Bereich des Bestandes aufgebracht werden soll, für den der Biomassewert berechnet worden ist. Aus der errechneten Ausbringungsmenge können dann die Steuersignale für die Dosierungseinrichtungen zum Einstellen der Ausbringungsmenge berechnet werden.

In einer bevorzugten Ausführungsform umfasst das Verfahren die Ausführung eines ersten und eines zweiten Zyklus, wobei der erste Zyklus synchron von jedem Ultraschallsensor ausgeführt wird und die Schritte umfasst:
(1a) Abgeben eines Schallimpulses in Richtung des Pflanzenbestandes;
(1b) Empfangen der Echos des Schallimpulses über einen vorgegebenen Zeitraum (Empfangszeitraum) unter Erhalt von Messwerten;
(1c) Transformieren der Messwerte in Distanzen;
(1d) Berechnen des Abstandes des Ultraschallsensors von der Bestandsoberfläche, des Abstandes des Ultraschallsensors vom Boden und optional der Abstände des Ultraschallsensors von den Blattetagen aus den Distanzen, wobei für die Bestimmung des Abstandes des Ultraschallsensors von der Bestandsoberfläche nur die Echos verwendet werden, die innerhalb des Empfangszeitraums von dem Ultraschallsensor zeitlich zuerst empfangen wurden, und für die Bestimmung des Abstandes des Ultraschallsensors vom Boden und optional der Abstände des Ultraschallsensors von den Blattetagen alle Echos verwendet werden, die innerhalb der Empfangszeiträume von dem Ultraschallsensor empfangen wurden;
(1e) Wiederholen der Schritte (1a) bis (1d) bis zur Beendigung des Verfahrens;
und wobei der zweite Zyklus die Schritte umfasst:
(2a) Berechnen zumindest eines Höhenwertes für die Höhenführung des Spritzengestänges aus den bestimmten Abständen aller Ultraschallsensoren von der Bestandsoberfläche,
(2b) Berechnen zumindest eines Biomassewertes zur Bestimmung der Aufbringungsmenge an Substanz aus den bestimmten Abständen aller Ultraschallsensoren von der Bestandsoberfläche, dem Boden und optional den Blattetagen;
(2c) wenn der berechnete Wert für den Abstand des Spritzengestänges von der Bestandsoberfläche von einem vorgegebenen Wert abweicht, Erzeugen eines oder mehrerer Steuersignale für die Höhenverstellung des Spritzengestänges, Übermittlung des Steuersignals für die Höhenverstellung des Spritzengestänges an ein oder mehrere Stellelemente und Änderung der Höhe des Spritzengestänges;
(2d) wenn die berechnete Ausbringungsmenge an Substanz von der bisher eingestellten Ausbringungsmenge an Substanz abweicht, Erzeugen eines oder mehrerer Steuersignale für die Dosierungseinrichtungen zur Einstellung der Ausbringungsmenge an Substanz, Übermittlung des oder der Steuersignale an ein oder mehrere Stellelemente zum Einstellen der Ausbringungsmenge und Änderung der Ausbringungsmenge der Dosierungseinrichtungen; und
(2e) Wiederholen der Schritte (2a) bis (2d) bis zur Beendigung des Verfahrens.

Zur Ausführung von Schritt (1c) sind vorzugsweise ein oder mehrere Auswerteeinheiten vorgesehen. Sind mehrere Auswerteeinheiten vorgesehen, so ist vorzugsweise jedem Ultraschallsensor eine gesonderte Auswerteeinheit zugeordnet, d. h. jede Auswerteeinheit verarbeitet nur die Messwerte eines einzigen Ultraschallsensors. Ist hingegen nur eine Auswerteeinheit vorgesehen, so werden dennoch die Messwerte jedes Ultraschallsensors getrennt von den Messwerten der anderen Ultraschallsensoren verarbeitet.

Zweckmäßigerweise sind Datenleitungen vorgesehen, die eine Übertragung der Messwerte von den Ultraschallsensoren zu der oder den Auswerteeinheiten ermöglichen. Schritt (1c) kann die Abfrage der Messwerte der Ultraschallsensoren durch die Auswerteeinheiten umfassen. Alternativ können die Messwerte auch in Schritt (1b) von den Ultraschallsensoren an die zugehörige Auswerteeinheit übermittelt werden.

Schritt (1d) und die Schritte des zweiten Zyklus, mit Ausnahme der Übermittlung der Steuersignale an die Stellelemente, der Änderung der Höheneinstellung des Spritzengestänges und der Änderung der Ausbringungsmenge, werden vorzugsweise in einer Datenverarbeitungsanlage ausgeführt. Dazu werden die Distanzen von der oder den Auswerteeinheiten zweckmäßigerweise mittels Datenleitungen an die Datenverarbeitungsanalage übertragen. Wenn die Auswerteeinheit(en) hingegen Bestandteile der Datenverarbeitungsanlage sind, sind solche Übertragungen nicht erforderlich.

Die Schritte (2c) und (2d) können gleichzeitig ausgeführt werden, wenn eine Änderung sowohl der Ausbringungsmenge an Substanz als auch der Höhe des Spritzengestänges erforderlich ist.

In Schritt (2c) kann die Höhenverstellung aller Dosierungseinrichtungen durch eine Höhenverstellung des Spritzengestänges erreicht werden. Das Stellelement bewirkt dazu eine Höhenverstellung des Spritzengestänges.

In Schritt (2d) kann für alle Dosierungseinrichtungen ein einziges Stellelement vorgesehen sein, das die Ausbringungsmenge der Substanz an allen Dosierungseinrichtungen bestimmt. In diesem Fall muss nur ein Steuersignal erzeugt werden. Alternativ können für jede einzelne Dosierungseinrichtung oder für Gruppen von Dosierungseinrichtungen gesonderte Stellelemente vorgesehen sein. In diesem Fall wird für jedes Stellelement ein gesondertes Steuersignal erzeugt.

Der Begriff "Distanz" beschreibt in der vorliegenden Erfindung die Wegstrecke des reflektierten Schalls von der reflektierenden Oberfläche bis zum Empfänger des Ultraschallsensors. Die Distanz wird aus dem ursprünglichen Echowert, der die Laufzeit der Schallwellen beschreibt, erhalten.

Die Nutzung des oder der Biomassewerte zur bestandsspezifischen Applikation von Substanzen, insbesondere von Pflanzenschutzmitteln wie Wachstumsregulatoren und Fungiziden, erfolgt als unabhängige Größe einer funktionalen Beziehung (Regelfunktion), welche für verschiedene Getreidearten, deren Entwicklungsstadien und sonstige relevante Parameter spezifiziert ist. Die Regelfunktion resultiert typischerweise aus langjährigen experimentellen Arbeiten, auf deren Basis die Regelfunktion bestimmt werden kann. Die Regelfunktionen sind in der Datenverarbeitungsanlage hinterlegt. Regelfunktionen werden in der Fachsprache auch als "agronomische Handlungsanweisungen" bezeichnet.

Zweckmäßigerweise kann vorgesehen sein, dass der erste und zweite Zyklus nebeneinander ausgeführt werden. Der erste Durchlauf des zweiten Zyklus startet, sobald der erste Zyklus zumindest einmal durchlaufen worden ist, d. h. Abstände in Schritt (1c) berechnet worden sind. Erfindungsgemäß kann vorgesehen sein, dass der erste Zyklus aller 25 bis 100 ms, vorzugsweise aller 30 ms mit Schritt (1a) startet. Der Empfangszeitraum ist dabei kürzer als diese Zeitspanne und sollte bei etwa einem Drittel bis zwei Drittel dieser Zeitspanne liegen. Beträgt die Zeitspanne beispielsweise 30 ms, so kann der Empfangszeitraum 15 ms betragen, gefolgt von einer 15 ms langen Messpause. Erfindungsgemäß kann ferner vorgesehen sein, dass der zweite Zyklus aller 0,5 bis 2 s, vorzugsweise jede Sekunde mit Schritt (2a) startet. Vorzugsweise beginnt der erste Durchlauf des zweiten Zyklus 0,5 bis 2 s, vorzugsweise 1 s nach dem Beginn des ersten Durchlaufs des ersten Zyklus. Startet also der erste Durchlauf des ersten Zyklus zum Zeitpunkt 0 und werden der erste Zyklus alle 30 ms und der zweite Zyklus alle 1 s gestartet, so liegen für die Berechnungen des oder der Höhenwerte in Schritt (2a) und die Berechnung des oder der Biomassewerte in Schritte (2b) die Ergebnisse aus Schritt (1d) von 33 ersten Zyklen vor. Aus diesen Ergebnissen werden dann in den Schritten (2a) und (2b) der oder die Höhenwerte bzw. der oder die Biomassewerte berechnet.

Die Höhenführung des Spritzengestänges basiert somit jeweils auf den ersten Echos der Empfangszeiträume, aus welchen der Abstand der Ultraschallsensoren und damit des Spritzengestänges zur Bestandsoberfläche abgeleitet wird. Für die Berechnung der Biomasse hingegen sind die Echos von der Bestandsoberfläche, dem Boden und optional den Blattetagen bedeutsam. Diese Echos werden über den gesamten Empfangszeitraum erhalten.

Im zweiten Zyklus werden der oder die Höhenwerte (Schritt 2a) und der oder die Biomassewerte (Schritt 2b) aus den Abständen berechnet, die in Schritt (1d) des ersten Zyklus anfallen. Startet der erste Zyklus in kürzeren Zeitintervallen als der zweite Zyklus, so liegen in den Schritten (2a) und (2b) jeweils Werte für die Abstände von mehren ersten Zyklen vor. Diese Werte können in den Schritten (2a) und (2b) mittels bekannter mathematischer Verfahren in die Höhen- und Biomassewerte umgerechnet werden, beispielsweise durch Mittelwertbildung und die Anwendung einer Kalibrierfunktion. Die Mittelwertbildung kann in einer ersten Variante über die Werte der Abstände aller Ultraschallsensoren, die in einem Durchgang von Schritt (1d) erhalten werden, erfolgen; in einer zweiten Variante über die Werte der Abstände, die für ein und denselben Ultraschallsensor in den Schritten (1d) erhalten wurden, die innerhalb eines Durchganges des zweiten Zyklus angefallen sind; und in einer dritten Variante beides, d. h. die Mittelwertbildung aller Werte der Abstände von allen Ultraschallsensoren, die innerhalb eines Durchganges des zweiten Zyklus angefallen sind.

Nach Maßgabe der Erfindung kann ferner eine Vorrichtung zum Bestimmen der Biomasse von Pflanzenbeständen und der Höhenführung von Spritzengestängen insbesondere an einer Landmaschine vorgesehen sein, die insbesondere zur Ausführung des erfindungsgemäßen Verfahrens geeignet ist. Die Vorrichtung umfasst ein Spritzgerät mit einem Spritzengestänge, an dem eine Vielzahl von Dosierungseinrichtungen zur Ausbringung einer Substanz, wie einem Pflanzenschutzmittel, einem Schädlingsbekämpfungsmittel und/oder einem Düngemittel, auf den Pflanzenbestand angeordnet sind, und wobei an dem Spritzengestänge ferner Sensoren zur Charakterisierung des Pflanzenbestandes vorgesehen sind, wobei die Sensoren an dem Spritzengestänge in Bezug auf eine horizontale Achse verstellbar befestigt sind, so dass der Abstand zwischen Dosierungseinrichtungen und den Sensoren veränderlich ist und auf einen Wert von 0,5 bis 1,5 m eingestellt werden kann.

Unter "Sensoren zur Charakterisierung des Pflanzenbestandes" werden hier Sensor verstanden, die zumindest eine Eigenschaften des Pflanzenbestandes erfassen können. Beispielsweise können Ultraschallsensoren zur Bestimmung der Biomasse des Pflanzenbestandes und des Abstandes des Spritzengestänges von der Oberfläche des Pflanzenbestandes (Bestandsoberfläche) vorgesehen sein.

Die Sensoren sind vorzugsweise Ultraschallsensoren, Lichtreflexionssensoren, Kameras oder Kombinationen davon. Die Vorrichtung kann verschiedene Sensoren tragen, wodurch Multisensorplattformen realisiert werden können. Soll die erfindungsgemäße Vorrichtung zur Ausführung des erfindungsgemäßen Verfahrens verwendet werden, so sind die Sensoren Ultraschallsensoren. Die Vorrichtung kann in diesem Fall neben den Ultraschallsensoren zur Ausführungsform des erfindungsgemäßen Verfahrens weitere Sensoren aufweisen.

Die Ultraschallsensoren können handelsübliche Ultraschallsensoren sein. Derartige Ultraschallsensoren weisen typischerweise ein Element auf, das sowohl als Sender als auch als Empfänger dienen kann. Geeignete Ultraschallsensoren sind beispielsweise jene der *microsonic GmbH, Typ: wms-340*/*RT.* Die Ultraschallsensoren sind vorzugsweise an dem Spritzengestänge in derselben Höhe und ausgehend von der Mitte des Spritzgestänges beidseitig in etwa gleicher Entfernung voneinander an diesem befestigt.

Vorzugsweise sind vier Ultraschallsensoren vorgesehen. Es hat sich herausgestellt, dass die vierfache Ausführung der Ultraschallsensoren innerhalb einer Arbeitsbreite des Spritzengestänges, die meistens in einem Bereich von 24 bis 36 m liegt, die Erfassung der Biomasse in, gegenüber vorbekannten Systemen, bisher nicht erreichter räumlicher Auflösung ermöglicht. Hieraus resultiert die mit der vorliegenden Erfindung erreichte höhere Präzision hinsichtlich der bestandsspezifischen Applikation von Pflanzenschutzmitteln.

Die von den Ultraschallsensoren empfangenen Messwerte werden vorzugsweise jeweils zu gesonderten Auswerteeinheiten übertragen. Dabei kann es sich beispielsweise um Platinen handeln, die Bestandteil einer Rechenbox sind. Dort werden die Echos, unter Einbeziehung der Lufttemperatur, separat in Distanzen transformiert. Alternativ kann nur eine Auswerteeinheit vorgesehen sein, in der die Messwerte eines Ultraschallsensors gesondert von den Messwerten anderer Ultraschallsensoren in Distanzen transformiert werden. In beiden Fällen werden die Messwerte eines Ultraschallsensors unabhängig von den Messwerten aller anderen Ultraschallsensoren in Distanzen umgerechnet. Anschließend werden die Distanzen an eine Datenverarbeitungsanlage weitergeleitet. Dort können die Daten in eine Datei, beispielsweise im Format *.csv geschrieben werden. In der Datenverarbeitungseinheit wird aus diesen Distanzen der Abstand zwischen dem Ultraschallsensor und der Bestandsoberfläche, der Abstand zwischen dem Ultraschallsensor und dem Boden und optional die Abstände zwischen dem Ultraschallsensor und den Blattetagen des Pflanzenbestandes abgeleitet. Bei der Datenverarbeitungsanlage kann es sich um einen Computer, beispielsweise um einen PC, handeln. Die Datenverarbeitungsanlage befindet sich zweckmäßigerweise auf dem mobilen Träger.

Von den empfangenen Echos werden die jeweils ersten Echos eines oder mehrerer Empfangszeiträume verwendet, um das Spritzengestänge des Spritzgerätes fortwährend in einem festgelegten Abstand zur Bestandsoberfläche führen zu können. Das jeweils erste Echo beschreibt die Entfernung des Ultraschallsensors zur Bestandsoberfläche.

Die Ultraschallsensoren sind in einer Ausführungsform der Erfindung annähernd gleichmäßig voneinander beabstandet und in derselben Höhe an dem Spritzengestänge befestigt. Vorzugsweise befinden sich die Ultraschallsensoren in einem Abstand von 0,5 bis 1,0 m von der Bestandsoberfläche, wobei dieser Abstand durch die Höhenverstellung des Spritzengestänges auf einem vorgegebenen Wert gehalten werden kann. Die Dosierungseinrichtungen sollten sich in einem Abstand von 0,5 bis 1,0 m von der Bestandsoberfläche befinden, wobei dieser Abstand durch die Höhenverstellung des Spritzengestänges erfindungsgemäß auf einem vorgegebenen Wert gehalten wird. Mit der Höhenverstellung des Spritzengestänges wird auch die Höhe der Sensoren verändert.

Die Stromversorgung der Sensoren erfolgt vorzugsweise über einen Kabelstrang, besonders bevorzugt mittels eines kombinierten Daten- und Stromkabels, von dem mobilen Träger aus. Bei dem mobilen Träger kann es sich insbesondere um eine Landmaschine, typischerweise um eine Zugmaschine handeln.

Jeder der Sensoren kann mit einer gesonderten Auswerteeinheit verbunden sein, um die Auswertung der Messwerte eines Sensors gesondert von den Messwerten anderer Sensoren sicherzustellen. Alternativ kann eine einzige Auswerteeinheit vorgesehen sein, die jedoch die Messwerte eines Sensors gesondert von den Messwerten anderer Sensoren auswerten muss.

Die Sensoren sind erfindungsgemäß an dem Spritzengestänge verstellbar befestigt. Auf diese Weise kann der Abstand zwischen den Dosierungseinrichtungen und den Sensoren in Fahrtrichtung des mobilen Trägers verändert werden.

In einer bevorzugten Ausführungsform weist die erfindungsgemäße Vorrichtung schwenkbare oder ausfahrbare Halterungen auf, die mit einem Ende an dem Spritzengestänge befestigt sind und an deren anderem Ende ein Sensor angeordnet ist. Mittels der schwenkbaren Halterungen können Sensoren um eine horizontale Achse, die parallel zur Längsachse des Spritzengestänges und damit orthogonal zur Fahrtrichtung des mobilen Trägers verläuft, geschwenkt werden. Mittels der ausfahrbaren Halterung können die Sensoren auf der horizontalen Achse quer zur Längsrichtung des Spritzengestänges bewegt werden. Die ausfahrbaren Halterungen können beispielsweise mittels Stellelementen wie Teleskopzylindern realisiert werden.

Vorzugsweise ist die Schwenk- oder Ausfahrbewegung der Sensoren mittels eines Stellelementes, beispielsweise eines hydraulischen, pneumatischen oder elektrischen Stellelementes ausführbar. Beispielsweise kann im Falle einer schwenkbaren Halterung ein Hydraulikzylinder vorgesehen sein, dessen eines Ende gelenkig an dem Spritzengestänge oder an dem Ende der Halterung, das an dem Spritzengestänge befestigt ist, angebracht ist und dessen anderes Ende gelenkig an der Halterung in einem Abstand von diesem Ende der Halterung befestigt ist.

Der Abstand zwischen den Sensoren und den Dosierungseinrichtungen wird erfindungsgemäß, bezogen auf die Fahrtrichtung der Vorrichtung, auf einen Wert zwischen 0,5 bis 1,5 m und bevorzugt auf 1,0 m eingestellt, wobei die Sensoren, ebenfalls bezogen auf die Fahrrichtung der Vorrichtung, vor den Dosierungseinheiten angeordnet sein müssen. Die Stellelemente werden zweckmäßigerweise so ausgelegt, dass dieser Wert durch das Verstellen der Sensoren in Bezug auf eine horizontale Achse quer zur Längsachse des Spritzengestänges erreicht werden kann.

Zweckmäßigerweise sind die Sensoren unabhängig vom Abstand zwischen ihnen und den Dosierungseinrichtungen so angeordnet, dass ihre Sende- und/oder Empfangseinheit im Wesentlichen senkrecht zum Pflanzenbestand hin ausgerichtet ist. Sind die Sensoren Ultraschallsensoren, so sind die Ultraschallsensoren unabhängig vom Abstand zwischen ihnen und den Dosierungseinrichtungen so angeordnet, dass ihre Schallkegel im Wesentlichen senkrecht zum Pflanzenbestand hin ausgerichtet sind. Ein Vorteil von schwenkbaren oder ausfahrbaren Halterungen liegt darin, dass sie die Funktionalität des Spritzgerätes, insbesondere das Ein- und Ausklappen des Spritzengestänges, nicht einschränken.

Der Prozess vom Erheben der Messwerte bis zur Regelung der Ausbringungsmenge des Spritzengestänges über die Dosierungseinrichtungen, die Düsen, ist zeitkritisch.

Dieses Problem wird mit der erfindungsgemäß vorgesehenen Halterung für die Sensoren am Spritzengestänge überwunden. Die Halterung schränkt die Funktionalität des Spritzengestänges nicht ein. Sie ist vorteilhafterweise hydraulisch, pneumatisch oder elektrisch steuerbar. Im ausgeklappten Zustand des Spritzengestänges können die Halterungen vom Fahrerhaus des mobilen Trägers bis zu 2,0 m in Fahrtrichtung bewegt werden. Vorteilhafterweise wird ein Abstand von 1,0 m eingestellt zwischen der Geraden, auf der die Dosierungseinrichtungen angeordnet sind, und der dazu parallelen Geraden, auf der die Sensoren angeordnet sind. Auch wenn die Abstände zwischen den Sensoren und den Dosierungseinrichtungen unabhängig voneinander eingestellt werden können, so ist es doch vorteilhaft, wenn alle Sensoren denselben Abstand von den Dosierungseinrichtungen haben.

Der mittels der Halterungen erreichte Abstand der Sensoren zu den Dosierungseinrichtungen gewährt einen zeitlichen Freiraum für die Verarbeitung der Messwerte, deren Umsetzung ist eine Applikationsentscheidung bis hin zur Applikation selbst.

Das Ansteuern der Halterungen erfolgt über einen eigenständigen Kabelstrang vom mobilen Träger aus, beispielsweise durch eine Datenverarbeitungsanlage im Fahrerhaus.

Vorzugsweise sind insbesondere im Falle von schwenkbaren Halterungen die Sensoren in der Halterung drehbar um eine Achse gelagert, die sich durch die Halterung der Sensoren erstreckt. Diese Achse sollte sich parallel zur Längsachse des Spritzengestänges erstrecken und damit orthogonal zur Fahrrichtung des mobilen Trägers.

Das Anbringen des Sensors an der Halterung erfolgt vorzugsweise mit Hilfe einer Steckverbindung, welche einen schnellen An- und Abbau ermöglicht. Die Steckverbindung kann auch für weitere Sensorsysteme geeignet sein. Der Sensor wird dabei so angebracht, dass er nach dem Ausführen der Schwenkbewegung senkrecht zur Bodenoberfläche ausgerichtet ist.

Vorzugsweise sind alle Sensoren oder zumindest alle Sensoren gleicher Bauart an gleichen Halterungen befestigt. Ferner ist bevorzugt, dass alle Sensoren oder zumindest alle Sensoren gleicher Bauart mit gleichen Steckern an die Auswerteinheit(en) angeschlossen sind. Unter Sensoren gleicher Bauart werden hier Sensoren verstanden, die dasselbe Messprinzip nutzen.

Die Erfindung wird nachstehend anhand von Ausführungsbeispielen, die die Erfindung nicht einschränken sollen, unter Bezugnahme auf die Zeichnungen näher erläutert. Dabei zeigen
- Fig. 1: ein Fließschema, das eine Ausführungsform des erfindungsgemäßen Verfahrens veranschaulicht;
- Fig. 2: eine schematische Seitendarstellung einer ersten Ausführungsform der erfindungsgemäßen Vorrichtung mit einem Spritzgerät, das an einem mobilen Träger befestigt ist;
- Fig. 3: eine schematische Darstellung der in Fig. 2 gezeigten Ausführungsform an dem mobilen Träger von hinten;
- Fig. 4: eine schematische Darstellung des Spritzengestänges der in Fig. 2 gezeigten Ausführungsform von vorn;
- Fig. 5: eine schematische Schnittdarstellung des Spritzengestänges des in Fig. 4 gezeigten Spritzengestänges;
- Fig. 6: eine Schnittdarstellung der Halterung für einen Ultraschallsensor (Fig. 6a: Seitenansicht; Fig. 6b: Ansicht von unten; Fig. 6c: Draufsicht; Fig. 6d: perspektivische Darstellung);
- Fig. 7: ein Blockschaltbild einer Ausführungsform des erfindungsgemäßen Verfahrens und der erfindungsgemäßen Vorrichtung;
- Fig. 8: eine schematische Seitendarstellung einer zweiten Ausführungsform der erfindungsgemäßen Vorrichtung mit einem Spritzgerät, das an einem mobilen Träger befestigt ist;
- Fig. 9: eine schematische Darstellung des Spritzengestänges der in Fig. 8 gezeigten Ausführungsform von vorn;
- Fig. 10: eine schematische Schnittdarstellung des Spritzengestänges des in Fig. 8 gezeigten Spritzengestänges mit ausgefahrenen Halterungen; und
- Fig. 11: eine schematische Schnittdarstellung des Spritzengestänges des in Fig. 8 gezeigten Spritzengestänges mit eingefahrenen Halterungen.

### Beispiel 1: Erste Ausführungsform der erfindungsgemäßen Vorrichtung

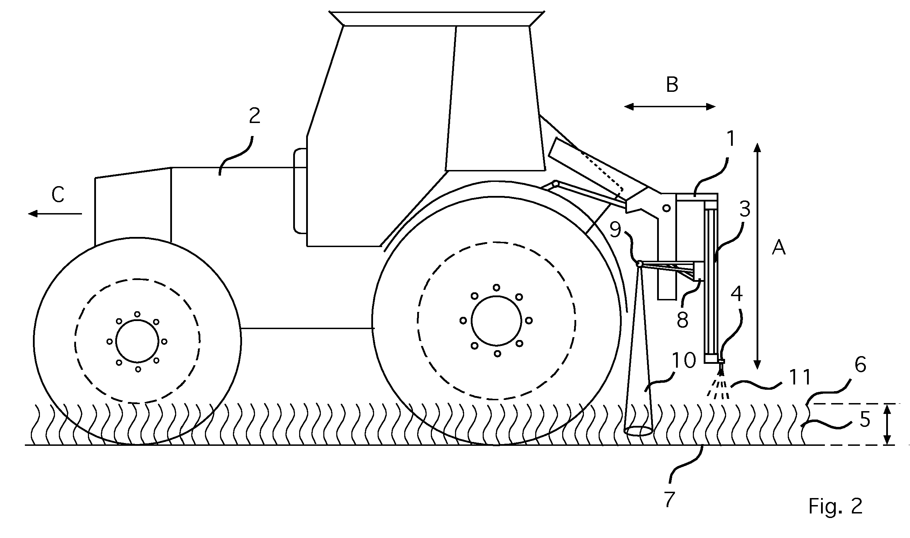

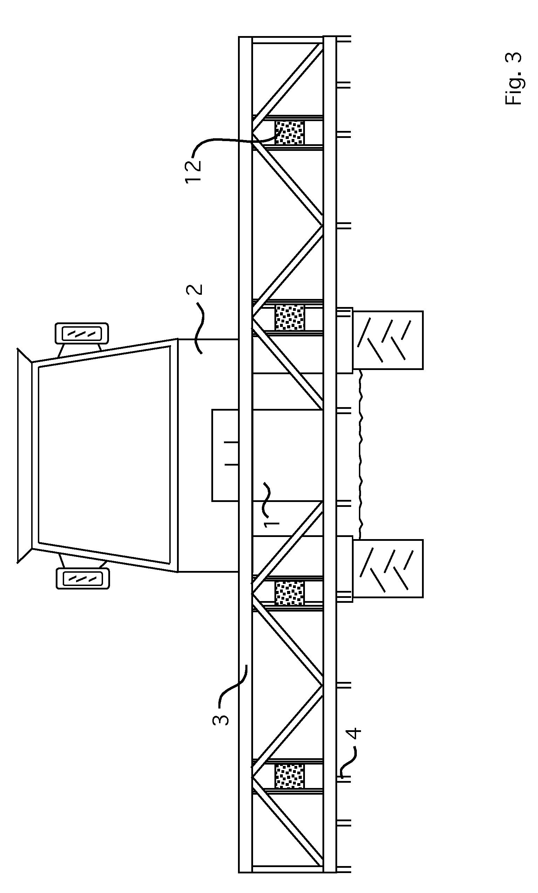

Die in den Figuren 2 bis 6 gezeigte erste Ausführungsform der erfindungsgemäßen Vorrichtung umfasst ein Spritzgerät 1, das an einem mobilen Träger, einer Zugmaschine 2, befestigt ist. Das Spritzgerät weist ein Spritzengestänge 3 auf, an dem sich eine Vielzahl von Dosierungseinrichtungen 4 für eine Substanz 11, die auf den Pflanzenbestand 5 aufgebracht werden soll, befindet. Die Dosierungseinrichtungen 4 sind als Spritzdüsen ausgeführt. Das Spritzengestänge 3 und damit die daran befestigen Spritzdüsen 4 sind höhenverstellbar (Pfeil A), wodurch der Abstand zwischen den Spritzdüsen 4 und der Oberfläche des Pflanzenbestandes 5 (Bestandoberfläche 6) verändert werden kann.

An dem Spritzengestänge 3 sind ferner Halterungen 8 befestigt, die jeweils einen Ultraschallsensor 9 aufnehmen. Mittels der Halterungen 8 sind die Ultraschallsensoren 9 von den Spritzdüsen 4 beabstandet und, bezogen auf die Fahrtrichtung (Pfeil C) der Zugmaschine 2, vor den Spritzdüsen 4 angeordnet. Die Ultraschallsensoren 9 senden die Schallimpulse im Wesentlichen senkrecht in Richtung des Pflanzenbestandes 5 und des Bodens 7, auf dem sich der Pflanzenbestand 5 befindet, aus. In Fig. 2 ist ein dabei ausgebildeter Schallkegel 10 gezeigt.

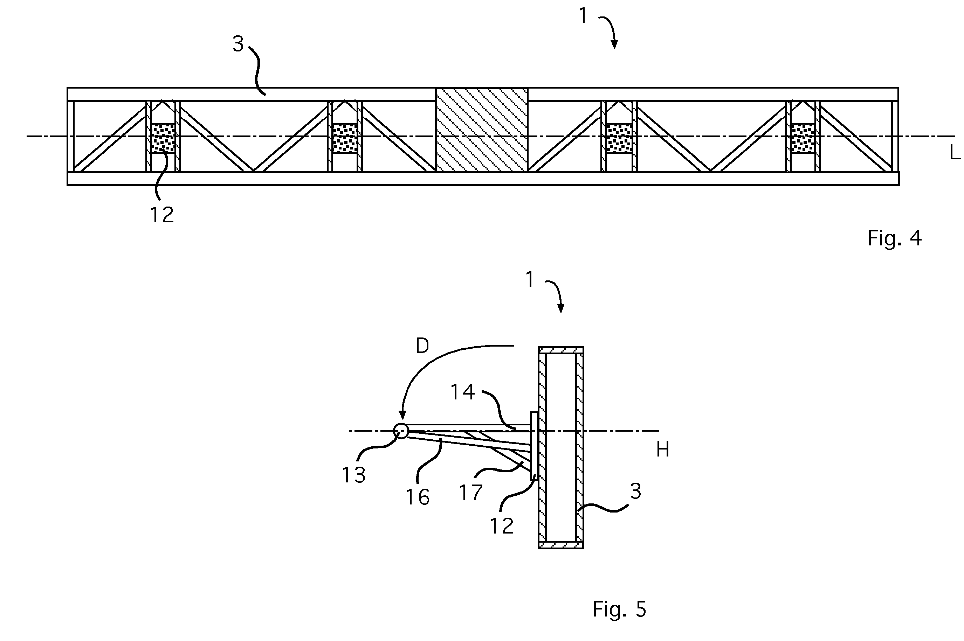

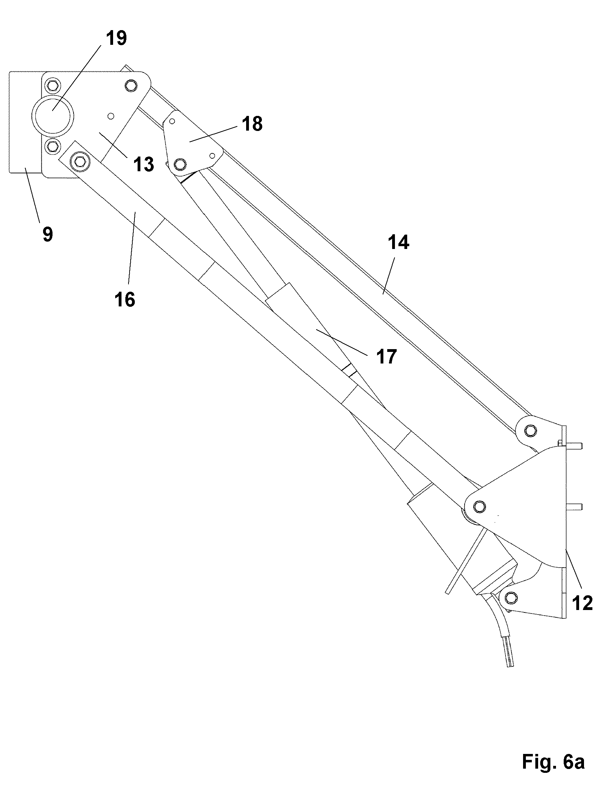

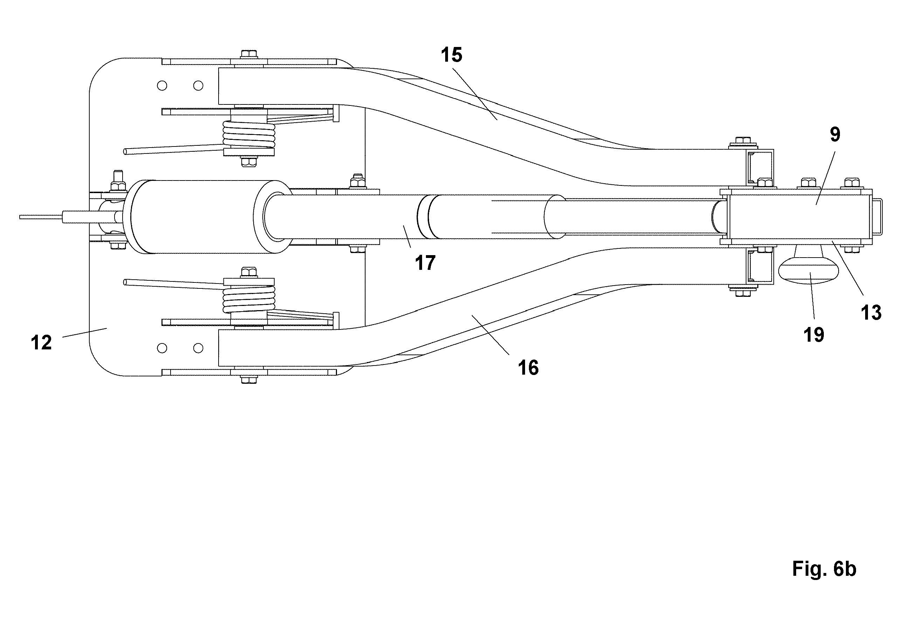

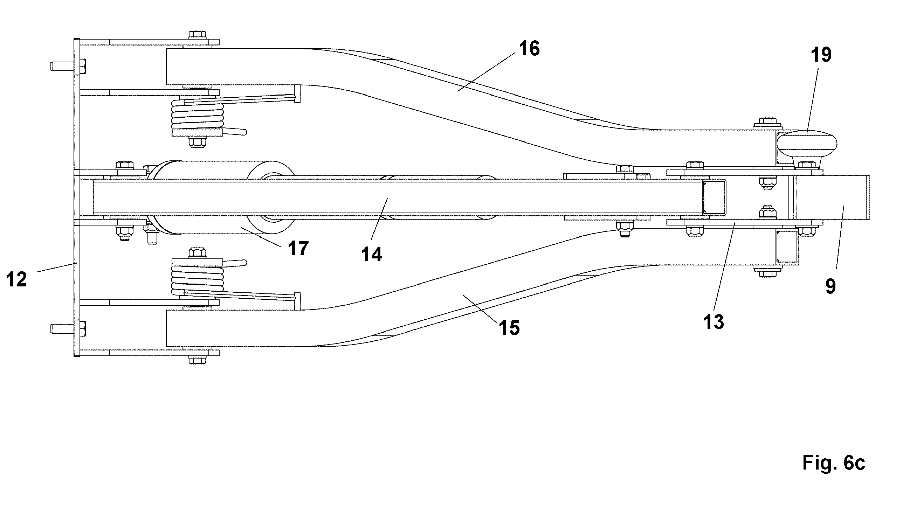

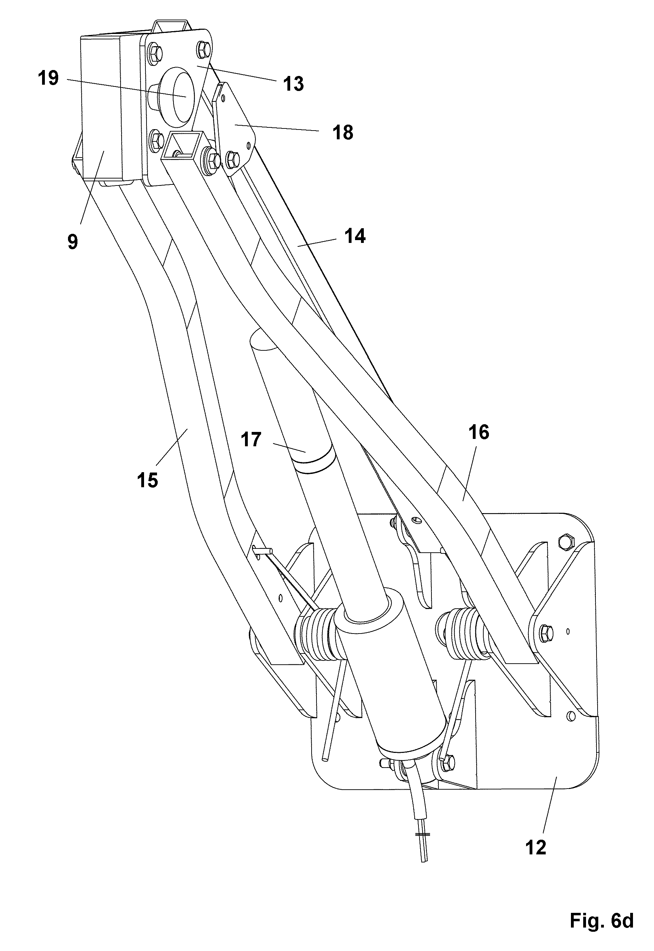

In Fig. 2 und 5 sind die Halterungen 8 im ausgeklappten Zustand gezeigt. In Fig. 5 und Fig. 6a bis 6c ist zu erkennen, dass die Halterungen 8 um eine horizontale Achse schwenkbar sind. Dazu befindet sich an einem Ende der Halterung 8 eine Halteplatte 12, die an dem Spritzengestänge 3, beispielsweise mittels Schraubverbindungen, befestigt ist. Am anderen Ende der Halterung 8 befindet sich eine Aufnahme 13 für einen Ultraschallsensor 9, in die dieser eingesteckt und mittels eines Befestigungselements 19, beispielsweise einer Stellschraube, lösbar fixiert werden kann. Die Halteplatte 12 und die Aufnahme 13 sind über Tragarme 14, 15, 16 miteinander verbunden. Der obere Tragarm 14 ist dabei mit einem Ende mittig an der Oberkante der Halteplatte 12 und mit seinem anderen Ende mittig an dem oberen Abschnitt der Aufnahme 13 angelenkt. Die unteren Tragarme 15, 16 sind mit einem Ende jeweils an den Seitenrädern der Halteplatte 12 angelenkt und erstrecken sich von dort bis zum unteren Abschnitt der Aufnahme 13, an deren Seitenflächen die anderen Enden der unteren Tragarme 15, 16 angelenkt sind. Ein Hydraulikzylinder 17 ist als Stellelement vorgesehen. Der Hydraulikzylinder ist mittig an der Unterkante der Halteplatte 12 angelenkt und erstreckt sich von dort zwischen den beiden unteren Tragarmen 15, 16 hindurch, bis zum oberen Tragarm 14, an den es über ein horizontales Gelenk 18 angelenkt ist, das sich auf einem Abschnitt des oberen Tragarms 14 befindet, der an die Aufnahme 13 angrenzt, so dass das Gelenk 18 von der Aufnahme 13 geringer als von der Halteplatte 12 beabstandet ist.

### Beispiel 2: Verfahren unter Verwendung der ersten Ausführungsform der erfindungsgemäßen Vorrichtung

### a) Verfahrensbeginn

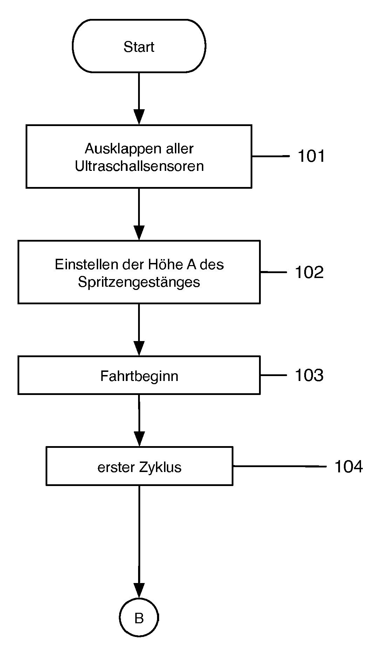

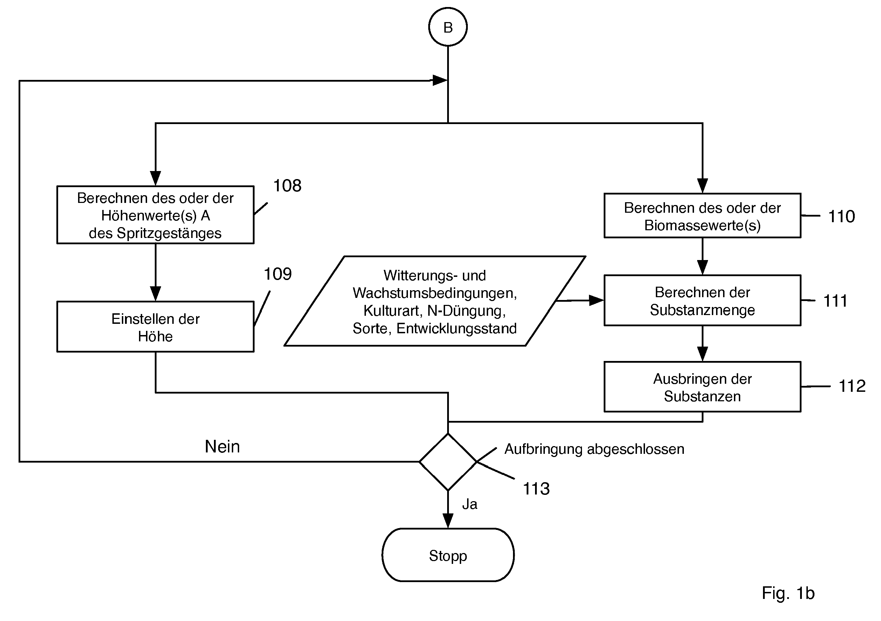

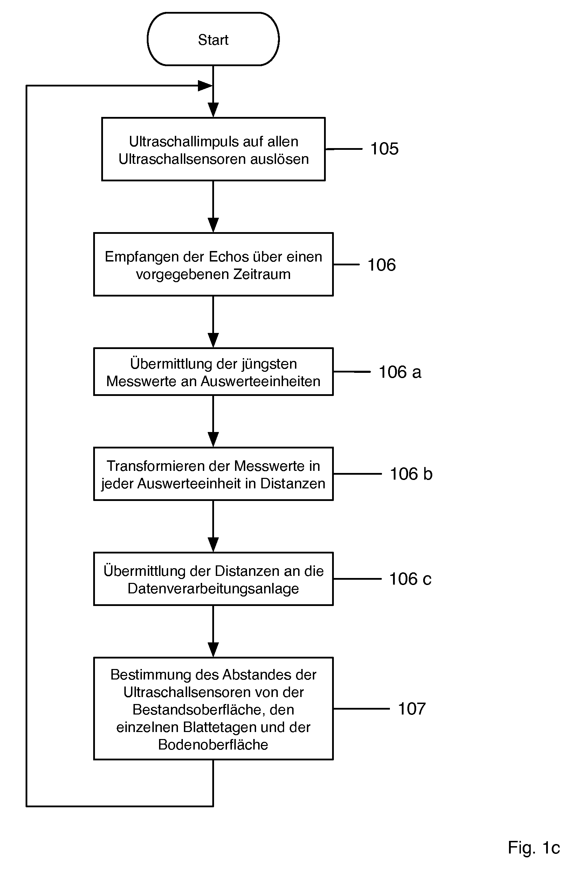

Vor Beginn des erfindungsgemäßen Verfahrens befinden sich die Halterungen 8 mit den Ultraschallsensoren 9 im angeklappten Zustand. In diesem Zustand ist der Hydraulikzylinder 17 auf seine minimale Länge verkürzt. Soll das Verfahren gestartet werden (siehe Fig. 1a), werden die Ultraschallsensoren 9 gleichzeitig ausgeklappt 101, indem der Hydraulikzylinder 17 ausgefahren wird. Dabei werden die Ultraschallsensoren 9 in Pfeilrichtung D um eine horizontale Achse, die parallel zur Längsachse L des Spritzengestänges verläuft, geschwenkt. Nach Ausführung der Schwenkbewegung beträgt der Abstand (Pfeil B) zwischen den Ultraschallsensoren 9 und den Spritzdüsen 4 in diesem Beispiel 1,0 m, und zwar entlang einer horizontalen Achse H quer zur Längsachse L des Spritzengestänges und damit in Fahrtrichtung (Pfeil C) der Zugmaschine 2. Anschließend oder gleichzeitig wird die Höhe (Pfeil A) des Spritzengestänges 3 und damit der Spritzdüsen 4 über der Bestandsoberfläche 6 auf einen vorgegebenen Wert eingestellt 102. Sodann kann die Fahrt der Zugmaschine 2 beginnen 103.

### b) 1. Zyklus

Mit Fahrtbeginn wird der erste Zyklus gestartet und bis Fahrtende ausgeführt 104. Der erste Zyklus startet alle 30 ms einen neuen Durchlauf, beginnend mit Schritt (1a). Ein neuer Durchlauf kann beginnen, auch wenn der vorangehende Durchlauf noch nicht vollständig abgearbeitet ist. Im ersten Zyklus werden synchron von jedem Ultraschallsensor 9 möglichst senkrecht Schallimpulse in Richtung des Pflanzenbestandes abgegeben 105, die Echos über einen vorgegebenen Empfangszeitraum unter Erhalt von Messwerten erfasst 106, die Messwerte von jedem Ultraschallsensor 9 jeweils an die zugehörige Auswerteeinheit 21 übermittelt 106a und dort in Distanzen umgerechnet. Die Distanzen werden dann von den Auswerteeinheiten 21 an eine Datenverarbeitungsanlage 23 übermittelt 106c. Dort wird aus den Distanzen der Abstand des Ultraschallsensors 9 von der Bestandsoberfläche 6, dem Boden 7 und den Blattetagen berechnet 107.

Im Anschluss an einen Empfangszeitraum ist eine Messpause von 15 ms vorgesehen, bevor ein weiterer Durchgang des ersten Zyklus gestartet wird. Die Messpause soll das Auflösen der noch vorhandenen Echos gewährleisten.

Die erhaltenen Messwerte werden von jedem Ultraschallsensor 9 an eine gesonderte Auswerteeinheit 21 übermittelt und dort unter Berücksichtigung der Lufttemperatur in Distanzen transformiert 106. Die Distanzen werden dann von den Auswerteeinheiten 21 an die Datenverarbeitungsanlage 23 übermittelt. Für die Bestimmung des Abstandes zwischen einem Ultraschallsensor 9 und der Bestandsoberfläche 6 werden nur die Echos verwendet, die innerhalb der Empfangszeiträume von dem Ultraschallsensor 9 zeitlich zuerst empfangen wurden. Mit anderen Worten, von den Echos, die innerhalb eines Durchgangs des ersten Zyklus anfallen, werden nur die verwendet, die nach Auslösen des Schallimpulses zuerst empfangen worden sind. Die anderen Echos bleiben für die Berechnung des Abstandes zwischen dem Ultraschallsensor 9 und der Bestandsoberfläche 6 unberücksichtigt. Für die Bestimmung des Abstandes eines Ultraschallsensors 9 vom Boden 7 und der Abstände des Ultraschallsensors 9 von den Blattetagen werden hingegen alle Echos, die innerhalb der Empfangszeiträume von dem Ultraschallsensor 9 empfangen wurden, berücksichtigt.

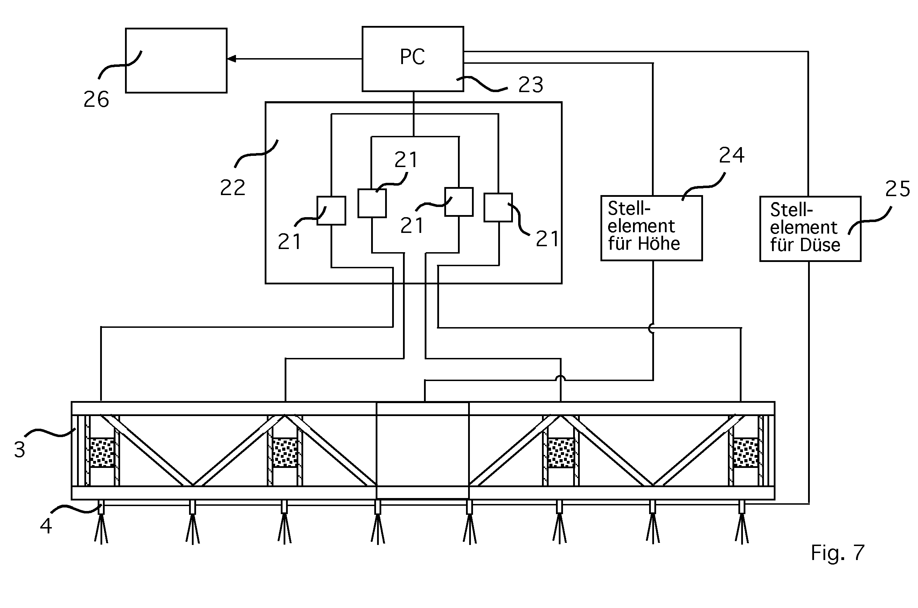

Die Auswerteeinheiten 21 sind in einer Rechenbox 22 (Fig. 7) untergebracht, die sich in der Zugmaschine 2 oder auf dem Spritzgerät 1 befinden kann. Jeder Ultraschallsensor 9 ist dabei mit einer gesonderten Auswerteeinheit 21 verbunden, in der nur die Messwerte eines Ultraschallsensors 9 in Distanzen transformiert werden.

Die zentrale Datenverarbeitungsanlage 23 kann sich in der Zugmaschine 2 befinden und beispielsweise ein Personal Computer sein. In der Datenverarbeitungsanlage 23 werden die empfangenen Daten in eine Datei, beispielsweise im Format *.csv geschrieben.

### c) 2. Zyklus

Der zweite Zyklus startet 1 s nach dem ersten Start des ersten Zyklus und dann jede Sekunde. Ein neuer Durchlauf kann beginnen, auch wenn der vorangehende Durchlauf noch nicht vollständig abgearbeitet ist.

Im zweiten Zyklus werden in der Datenverarbeitungsanlage 23 aus den im ersten Zyklus erhaltenen Abständen der Höhenwert 108 und der Biomassewert 110 berechnet. Die Höhe des Spritzengestänges 3 wird verändert 109, wenn eine Abweichung von dem vorgegebenen Wert vorliegt, oder die Ausbringungsmenge der Substanz 11 wird an den berechneten Biomassewert angepasst 112 oder beides. Die Berechnung der Biomasse kann in der in DE 10 2008 009 753 B3 beschriebenen Weise vorgenommen werden.

In der Datenverarbeitungsanlage 23 wird aus den Abständen der einzelnen Ultraschallsensoren 9 ein Höhenwert oder, im Falle von separat ansteuerbaren Teilbereichen des Spritzengestänges, mehrere Höhenwerte für die Höhe des Spritzgestänges 3 und damit der Spritzdüsen 4 über der Bestandsoberfläche berechnet 108. Dabei werden zur Berechnung des Höhenwertes für die gemessene Höhe des Spritzgestänges nur die Daten berücksichtigt, die von den Auswerteeinheiten 21 für die Abstände der Ultraschallsensoren 9 von der Bestandsoberfläche 6 bestimmt worden sind. Weist das Spritzengestänge 3 keine separat ansteuerbaren Teilbereiche auf, so wird aus diesen Abständen beispielsweise durch Mittelwertbildung der Höhenwert für den Abstand des Spritzgestänges 3 und damit der Spritzdüsen 4 von der Bestandsoberfläche berechnet. Der so erhaltene Höhenwert wird als gemessene Höhe mit einem vorgegebenen Wert für die Höhe des Spritzengestänges 3 verglichen. Weicht die gemessene Höhe von dem vorgegebenen Wert ab, wird ein Steuersignal in der Datenverarbeitungsanlage 23 erzeugt und an ein Stellelement 24, beispielsweise einen Stellmotor, übermittelt. Das Stellelement 24 bewirkt sodann eine Veränderung der Höhe des Spritzengestänges 3 auf den vorgegebenen Wert 109.

Parallel dazu werden in der Datenverarbeitungsanlage 23 mittels der an sie übermittelten Distanzen die Biomassewerte berechnet. Dabei können neben den in allen Auswerteeinheiten 21 bestimmten Abständen der Ultraschallsensoren 9 von der Bestandsoberfläche, der Abstände der Ultraschallsensoren 9 vom Boden 7 auch die Abstände der Ultraschallsensoren 9 von den Blattetagen berücksichtigt werden. Aus den Abständen werden dann die Biomassewerte berechnet 110. Die Berechnung der Biomassewerte erfolgt in der an sich bekannten Weise, allerdings mit dem Unterschied, dass die Echos jedes Ultraschallsensors 9 zuvor in einer gesonderten Auswerteeinheit 21 ausgewertet worden sind. Aus den berechneten Biomassewerten wird dann unter Einbeziehung weiterer Werte, wie die Witterungs- und Wachstumsbedingungen, die Kulturart, die Sorte, die Stickstoff-Düngung und/oder der Entwicklungsstand des Pflanzenbestandes, die Auftragungsmenge an Substanz (im Folgenden auch als Substanzmenge bezeichnet) berechnet, die auf den Pflanzenbestand 5 aufgebracht werden soll 111. Die Substanzmenge kann dabei anhand einer Regelfunktion berechnet werden, die der Entwickler der Regelfunktion getroffen hat. Die Regelfunktion basiert dabei auf den Ergebnissen langjähriger experimenteller Arbeiten.

Ergibt ein Vergleich der berechneten Substanzmenge mit dem bisher eingestellten Wert für die Substanzmenge, dass die berechnete Substanzmenge von der bisher eingestellten Substanzmenge abweicht, so wird ein Steuersignal für die Spritzdüsen 4 in der Datenverarbeitungsanlage erzeugt und an ein Stellelement 25 für die Spritzdüsen 4 übermittelt. Bei dem Stellelement 25 kann es sich beispielsweise um eine Pumpe handeln, die die Substanz aus einem Vorratsbehälter zu den Spritzdüsen 4 befördert. Wird nun der von der Pumpe erzeugte Druck erhöht, so erhöht sich die Menge an Substanz 11, die pro Zeiteinheit von den Spritzdüsen 4 auf den Pflanzenbestand 5 versprüht wird. Wird der Druck verringert, so verringert sich die Menge an Substanz 11 die pro Zeiteinheit von den Spritzdüsen 4 auf den Pflanzenbestand 5 versprüht wird. Gemäß diesem Steuersignal wird die Substanz 11 auf den Pflanzenbestand 5 aufgebracht 112.

Alternativ zu dem Stellelement 25, das die Aufbringungsmenge an Substanz zentral für alle Spritzdüsen 4 steuert, kann Gruppen von Düsen (Gruppenschaltung) oder sogar jeder einzelnen Düse (Einzeldüsenschaltung) ein gesondertes Stellelement zugeordnet sein, das die Substanzmenge nur einer Düse oder nur einer Gruppe von Düsen einstellt. In diesem Fall werden von der Datenverarbeitungsanlage gesonderte Steuersignale für jedes einzelne Stellelement erzeugt. Damit sind die Einzeldüsen oder die Gruppen von Düsen des Spritzengestänges separat ansteuerbar, was die Präzision der Ausbringung der Substanz weiter verbessert.

Zyklus 2 wird wiederholt, bis die Aufbringung der Substanz auf den Pflanzenbestand abgeschlossen ist 113.

Die berechneten Werte und die eingestellten Werte für die Höhe der Spritzdüsen über der Bestandsoberfläche und für die Ausbringungsmenge können in einer Anzeigeeinheit 26, beispielsweise einem Monitor im Führerhaus der Zugmaschine 2, angezeigt werden.

### d) Verfahrensabschluss

Sobald die Aufbringung der Substanz auf den Pflanzenbestand abgeschlossen ist, können die Ultraschallsensoren 9 entgegen Pfeilrichtung D wieder an das Spritzengestänge 3 angeklappt werden.

### Beispiel 3: Zweite Ausführungsform der erfindungsgemäßen Vorrichtung

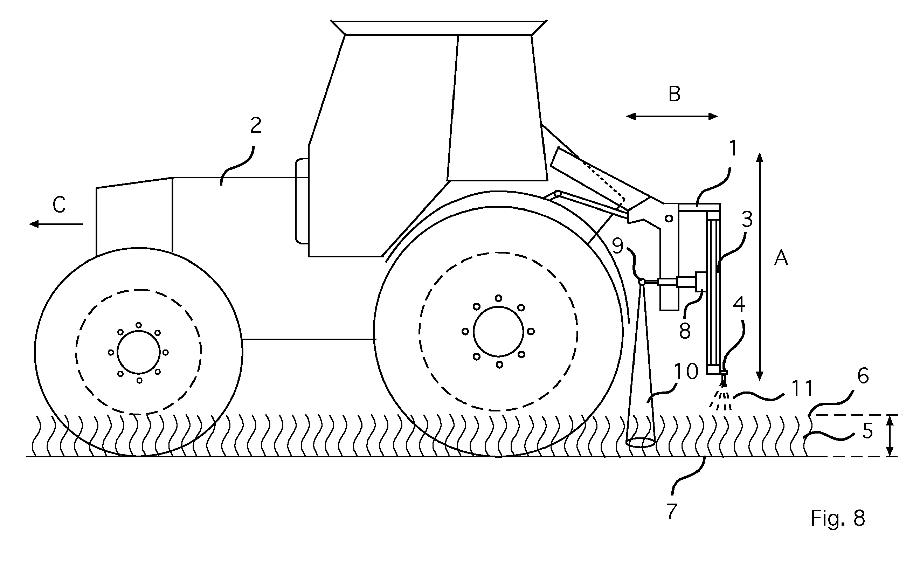

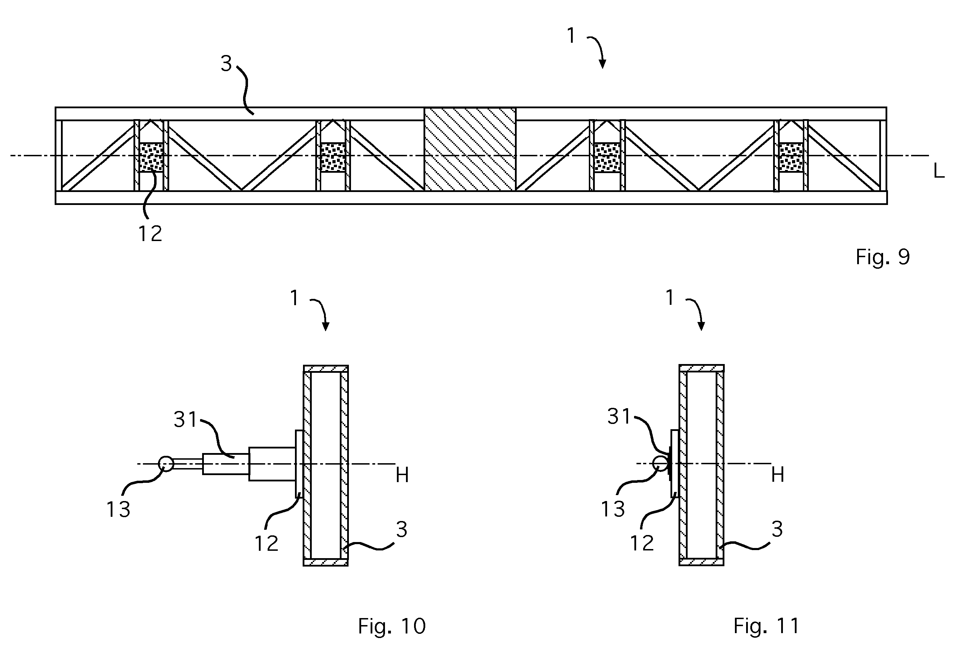

Die in den Figuren 8 bis 11 gezeigte zweite Ausführungsform der erfindungsgemäßen Vorrichtung entspricht der in Beispiel 1 gezeigten ersten Ausführungsform, außer dass die Halterungen 8 nicht schwenkbar sind. Stattdessen ist zwischen den Halteplatten 12 und den Aufnahmen 13 ein Teleskopgestänge 31 angeordnet, mit dessen Hilfe der Abstand zwischen den Ultraschallsensoren 9 und den Dosierungseinrichtungen auf horizontalen Achsen H, die quer zur Längsachse L des Spritzengestänges verlaufen, verändert werden kann (Pfeil B). In Fig. 10 ist das Teleskopgestänge 31 ausgefahren, in Fig. 11 hingegen eingefahren.

### Beispiel 4: Verfahren unter Verwendung der zweiten Ausführungsform der erfindungsgemäßen Vorrichtung

Das Verfahren unter Verwendung der zweiten Ausführungsform der erfindungsgemäßen Vorrichtung entspricht dem in Beispiel 2 geschilderten Verfahren mit folgenden Ausnahmen:

### a) Verfahrensbeginn

Vor Beginn des erfindungsgemäßen Verfahrens befinden sich die Halterungen 8 mit den Ultraschallsensoren 9 im eingefahrenen Zustand. In diesem Zustand ist das Teleskopgestänge 31 auf seine minimale Länge verkürzt. Soll das Verfahren gestartet werden, werden die Ultraschallsensoren 9 gleichzeitig ausgefahren, indem das Teleskopgestänge 31 ausgefahren wird. Dabei werden die Ultraschallsensoren 9 jeweils entlang einer horizontalen Achse H, die quer zur Längsachse L des Spritzengestänges verläuft, verschoben. Nach Ausführung dieser Bewegung (siehe Fig. 8 und 10) beträgt der Abstand (Pfeil B) zwischen den Ultraschallsensoren 9 und den Spritzdüsen 4 in diesem Beispiel 1,0 m, und zwar entlang der horizontalen Achse H quer zur Längsachse L des Spritzengestänges und damit in Fahrtrichtung (Pfeil C) der Zugmaschine 2.

### d) Verfahrensabschluss

Sobald die Aufbringung der Substanz auf den Pflanzenbestand abgeschlossen ist, können die Ultraschallsensoren 9 mittels des Teleskopgestänges 31 wieder eingefahren werden, wodurch der in Fig. 11 gezeigte Zustand hergestellt wird.

### Bezugszeichenliste

- 1: Spritzgerät
- 2: Zugmaschine
- 3: Spritzengestänge
- 4: Spritzdüse
- 5: Pflanzenbestand
- 6: Bestandsoberfläche
- 7: Boden
- 8: Halterung
- 9: Ultraschallsensor
- 10: Schallkegel
- 11: Substanz
- 12: Halteplatte
- 13: Aufnahme
- 14: oberer Tragarm
- 15: unterer Tragarm
- 16: unterer Tragarm
- 17: Hydraulikzylinder
- 18: Gelenk
- 19: Stellschraube

- 21: Auswerteeinheit
- 22: Rechenbox
- 23: Datenverarbeitungsanlage
- 24: Stellelement für die Höhe des Spritzengestänges
- 25: Stellelement für die Spritzdüsen
- 26: Anzeigeeinheit

- 31: Teleskopgestänge

## Patentansprüche

1. Verfahren zum Ausbringen einer Substanz (11), wie eines Pflanzenschutzmittels, eines Schädlingsbekämpfungsmittels und/oder eines Düngemittels, auf Pflanzenbestände (5) mittels eines Spritzgerätes (1), das an einem mobilen Träger (2) befestigt ist und ein höhenverstellbares Spritzengestänge (3) aufweist, an dem eine Vielzahl von Dosierungseinrichtungen (4) für die Substanz (11) und zumindest vier, gleichmäßig voneinander beabstandete Ultraschallsensoren (9) befestigt sind, wobei während der Überfahrt des mobilen Trägers (2) mittels der Ultraschallsensoren (9) zyklisch Schallimpulse in Richtung des Pflanzenbestandes (5) abgegeben werden und die von dem Pflanzenbestand (5) und vom Boden (7) reflektierten Echos erfasst werden, **dadurch gekennzeichnet, dass** das Verfahren umfasst:
(a) die zyklische Bestimmung des Abstandes zwischen den Ultraschallsensoren (9) und der Oberfläche (6) des Pflanzenbestandes; und Höhenverstellung des Spritzengestänges (3), wenn der Abstand zwischen den Ultraschallsensoren (9) und der Oberfläche (6) des Pflanzenbestandes von einem vorgegebenen Wert abweicht; und gleichzeitig
(b) die zyklische Bestimmung der Biomasse unter Erzeugung eines Biomassewertes, der ein Maß für die aktuelle Biomasse auf einem Bereich ist, der von Ultraschallsensoren (9) abgetastet wird; Berechnung der Ausbringungsmenge an der Substanz (11), die auf den Pflanzenbestand (5) dieses Bereiches ausgebracht werden soll, unter Erzeugung zumindest eines Steuersignals für die Dosierungseinrichtungen (4) und Einstellen der Ausbringungsmenge der Substanz (11) mittels der Dosierungseinrichtungen (4) auf Basis des oder der Steuersignale; wobei
- die zyklische Bestimmung des Abstandes zwischen den Ultraschallsensoren (9) und der Oberfläche (6) des Pflanzenbestandes in Schritt (a) anhand der Echos erfolgt, die innerhalb eines ersten Zyklus von den Ultraschallsensoren (9) zeitlich zuerst empfangen werden;
- die zyklische Bestimmung der Biomasse in einem zweiten Zyklus anhand aller Echos erfolgt, die innerhalb eines ersten Zyklus von den Ultraschallsensoren (9) empfangen werden; und
- für jeden Ultraschallsensor in jedem ersten Zyklus ein Wert für den Abstand zwischen dem Ultraschallsensor und der Bestandsoberfläche und ein Wert für den Abstand des Ultraschallsensors vom Boden berechnet wird.

2. Verfahren nach Anspruch 1, **dadurch gekennzeichnet, dass** die Berechnung der Biomassewerte die Bestimmung des Abstandes der Ultraschallsensoren (9) von der Oberfläche (6) des Pflanzenbestandes , die Bestimmung des Abstandes der Ultraschallsensoren (9) von dem Boden (7) und/oder die Bestimmung der Abstände der Ultraschallsensoren (9) von den Blattetagen des Pflanzenbestandes (5) umfasst.

3. Verfahren nach einem der vorstehenden Ansprüche, **dadurch gekennzeichnet, dass** das Verfahren die Ausführung eines ersten und eines zweiten Zyklus umfasst, wobei der erste Zyklus synchron von jedem Ultraschallsensor (9) ausgeführt wird und die Schritte umfasst:
(1a) Abgeben eines Schallimpulses in Richtung des Pflanzenbestandes;
(1b) Empfangen der Echos des Schallimpulses über einen vorgegebenen Zeitraum (Empfangszeitraum) unter Erhalt von Messwerten;
(1c) Transformieren der Messwerte in Distanzen;
(1d) Berechnen des Abstandes des Ultraschallsensors von der Oberfläche des Pflanzenbestandes, des Abstandes des Ultraschallsensors vom Boden und optional der Abstände des Ultraschallsensors von den Blattetagen aus den Distanzen, wobei für die Bestimmung des Abstandes des Ultraschallsensors von der Oberfläche des Pflanzenbestandes nur die Echos verwendet werden, die innerhalb des Empfangszeitraums von dem Ultraschallsensor zeitlich zuerst empfangen wurden, und für die Bestimmung des Abstandes des Ultraschallsensors vom Boden und optional der Abstände des Ultraschallsensors von den Blattetagen alle Echos verwendet werden, die innerhalb der Empfangszeiträume von dem Ultraschallsensor empfangen wurden;
(1e) Wiederholen der Schritte (1a) bis (1d) bis zur Beendigung des Verfahrens;
und wobei der zweite Zyklus die Schritte umfasst:
(2a) Berechnen zumindest eines Höhenwertes für die Höhenführung des Spritzengestänges aus den bestimmten Abständen aller Ultraschallsensoren von der Oberfläche des Pflanzenbestandes,
(2b) Berechnen zumindest eines Biomassewertes zur Bestimmung der Ausbringungsmenge an Substanz aus den bestimmten Abständen aller Ultraschallsensoren von der Oberfläche des Pflanzenbestandes, dem Boden und optional den Blattetagen;
(2c) wenn der berechnete Wert für den Abstand des Spritzengestänges von der Oberfläche des Pflanzenbestandes von einem vorgegebenen Wert abweicht, Erzeugen eines oder mehrerer Steuersignale für die Höhenverstellung des Spritzengestänges, Übermittlung des Steuersignals für die Höhenverstellung des Spritzengestänges an ein oder mehrere Stellelemente und Änderung der Höhe des Spritzengestänges;
(2d) wenn die berechnete Ausbringungsmenge an Substanz von der bisher eingestellten Ausbringungsmenge an Substanz abweicht, Erzeugen eines oder mehrerer Steuersignale für die Dosierungseinrichtungen zur Einstellung der Ausbringungsmenge an Substanz, Übermittlung des oder der Steuersignale an ein oder mehrere Stellelemente zum Einstellen der Ausbringungsmenge und Änderung der Ausbringungsmenge der Dosierungseinrichtungen; und
(2e) Wiederholen der Schritte (2a) bis (2d) bis zur Beendigung des Verfahrens.

4. Verfahren nach einem der vorstehenden Ansprüche, **dadurch gekennzeichnet, dass** jeder der Ultraschallsensoren (9) mit einer gesonderten Auswerteeinheit (21) verbunden ist.

5. Vorrichtung zum Bestimmen der Biomasse von Pflanzenbeständen und der Höhenführung von Spritzengestängen (3) insbesondere an einer Landmaschine (2), insbesondere zur Ausführung eines Verfahrens nach den Ansprüchen 1 bis 4, wobei die Vorrichtung ein Spritzgerät (1) mit einem Spritzengestänge (3) umfasst, an dem eine Vielzahl von Dosierungseinrichtungen (4) zur Ausbringung einer Substanz (11), wie einem Pflanzenschutzmittel, einem Schädlingsbekämpfungsmittel und/oder einem Düngemittel, auf den Pflanzenbestand (5) angeordnet sind, und wobei an dem Spritzengestänge (3) ferner Sensoren zur Charakterisierung des Pflanzenbestandes (5) vorgesehen sind, wobei die Sensoren an dem Spritzengestänge (3) in Bezug auf eine horizontale Achse verstellbar befestigt sind, so dass der Abstand zwischen den Dosierungseinrichtungen (4) und den Sensoren in Fahrtrichtung veränderlich ist und auf einen Wert von 0,5 bis 1,5 m eingestellt werden kann.

6. Vorrichtung nach Anspruch 5, **dadurch gekennzeichnet, dass** die Sensoren jeweils in Bezug auf eine horizontale Achse quer zur Längsachse des Spritzengestänges (3) verstellbar befestigt sind.

7. Vorrichtung nach Anspruch 5 oder Anspruch 6, **dadurch gekennzeichnet, dass** sie schwenkbare oder ausfahrbare Halterungen (8) aufweist, die mit einem Ende (12) an dem Spritzengestänge (3) befestigt sind und an deren anderen Ende (13) ein Sensor angeordnet ist.

8. Vorrichtung nach einem der Ansprüche 5 bis 7, **dadurch gekennzeichnet, dass** die Schwenk- oder Ausfahrbewegung der Sensoren mittels eines hydraulischen, elektrischen oder pneumatischen Stellelementes (17) ausführbar ist.

9. Vorrichtung nach Anspruch 8, **dadurch gekennzeichnet, dass** die schwenkbaren Halterungen jeweils einen Hydraulikzylinder (17) aufweisen, dessen eines Ende gelenkig an dem Spritzengestänge (3) oder an dem Ende (12) der Halterung (8), das an dem Spritzengestänge (3) befestigt ist, angebracht ist und dessen anderes Ende gelenkig an der Halterung (8) in einem Abstand von diesem Ende (13) der Halterung (8) befestigt ist.

10. Vorrichtung nach einem der Ansprüche 5 bis 9, **dadurch gekennzeichnet, dass** zumindest vier Sensoren vorgesehen sind, wobei die Sensoren voneinander annähernd äquidistant beabstandet sind.

11. Vorrichtung nach einem der Ansprüche 5 bis 10, **dadurch gekennzeichnet, dass** die Sensoren unabhängig vom Abstand zwischen ihnen und den Dosierungseinrichtungen (4) so angeordnet sind, dass ihre Sende- und/oder Empfangseinheit im Wesentlichen senkrecht zum Pflanzenbestand (5) hin ausgerichtet ist.

12. Vorrichtung nach Anspruch 11, **dadurch gekennzeichnet, dass** die Ultraschallsensoren in der Halterung (8) drehbar um eine Achse gelagert sind, die sich durch die Halterung (8) erstreckt.

13. Vorrichtung nach einem der Ansprüche 5 bis 12, **dadurch gekennzeichnet, dass** jeder Sensor mit einer gesonderten Auswerteeinheit (21) verbunden ist.

14. Vorrichtung nach einem der Ansprüche 5 bis 13, **dadurch gekennzeichnet, dass** die Sensoren Ultraschallsensoren (9), Lichtreflexionssensoren, Kameras oder Kombinationen davon sind.

## Claims

1. A method for applying a substance (11), such as a plant protection product, a pesticide, and/or a fertilizer, to cultures (5) by means of a sprayer (1) that is mounted to a mobile support (2) and has a height-adjustable spray rodding (3) to which a plurality of dosing facilities (4) for the substance (11) and at least four evenly spaced ultrasonic sensors (9) are mounted, wherein during use of the mobile support (2) sound pulses are cyclically delivered toward the culture (5) by means of the ultrasonic sensors (9) and the echoes reflected by the culture (5) and the ground (7) are detected, **characterized in that** the method comprises:
(a) cyclically determining the distance between the ultrasonic sensors (9) and the surface (6) of the culture; and height adjustment of the spray rodding (3) if the distance between the ultrasonic sensors (9) and the surface (6) of the culture deviates from a given value; and at the same time
(b) cyclically determining the biomass to generate a biomass value that is a measure for the actual biomass on an area that is scanned by the ultrasonic sensors (9); calculating the rate of application of the substance (11) to be applied to the culture (5) of said area to generate at least one control signal for the dosing facilities (4); and adjusting the rate of application of the substance (11) by means of the dosing facilities (4) on the basis of the control signal(s); wherein
- the cyclically determination of the distance between the ultrasonic sensors (9) and the surface (6) of the culture in step (a) is done based on the echoes that are received first in time by the ultrasonic sensors (9) within a first cycle;
- the cyclically determination of the biomass in a second cycle is done based on all of the echoes that are received by the ultrasonic sensors (9) within a first cycle; and
- for each ultrasonic sensor in each first cycle a value for the distance between the ultrasonic sensor and the culture surface and a value for the distance of the ultrasonic sensor from the ground is calculated.

2. The method according to claim 1, **characterized in that** the calculation of the biomass values includes the determination of the distance of the ultrasonic sensors (9) from the surface (6) of the culture, the determination of the distance of the ultrasonic sensors (9) from the ground (7), and/or the determination of the distances of the ultrasonic sensors (9) from the tiers of leaves of the culture (5).

3. The method according to any one of the preceding claims, **characterized in that** the method includes carrying out a first and a second cycle, wherein the first cycle is carried out synchronously by each ultrasonic sensor (9) and comprises the steps of:
(1a) delivering a sound pulse toward the culture;
(1b) receiving the echoes of the sound pulse for a given period of time (receiving time) to obtain measured values;
(1c) transforming the measured values into distances;
(1d) calculating the distance of the ultrasonic sensor from the surface of the culture, the distance of the ultrasonic sensor from the ground and optionally the distances of the ultrasonic sensor from the tiers of leaves from the distances, wherein for the determination of the distance of the ultrasonic sensor from the surface of the culture only these echoes are used that were received first in time by the ultrasonic sensor within the receiving time, and for the determination of the distance of the ultrasonic sensor from the ground and optionally the distances of the ultrasonic sensor from the tiers of leaves all of the echoes are used that were received by the ultrasonic sensor within the receiving time;
(1e) repeating steps (1a) to (1d) until completion of the method;
and wherein the second cycle comprises the steps of:
(2a) calculating at least one height value for the height control of the spray rodding from the determined distances of all ultrasonic sensors from the surface of the culture,
(2b) calculating at least one biomass value for determining the rate of application of substance from the determined distances of all ultrasonic sensors from the surface of the culture, the ground, and optionally the tiers of leaves;
(2c) if the calculated value for the distance of the spray rodding from the surface of the culture deviates from a given value, generating one or more control signals for the height adjustment of the spray rodding, transmitting the control signal for the height adjustment of the spray rodding to one or more actuators, and changing the height of the spray rodding;
(2d) if the calculated rate of application of substance deviates from the so far adjusted rate of application of substance, generating one or more control signals for the dosing facilities for adjusting the rate of application of substance, transmitting the control signal(s) to one or more actuators for adjusting the rate of application, and changing the rate of application of the dosing facilities; and
(2e) repeating steps (2a) to (2d) until completion of the method.

4. The method according to any one of the preceding claims, **characterized in that** each of the ultrasonic sensors (9) is connected to a separate evaluation unit (21).

5. A device for determining the biomass of cultures and the height control of spray roddings (3), in particular on an agricultural machine (2), in particular for performing a method according to claims 1 to 4, wherein the device comprises a sprayer (1) with a spray rodding (3) on which a plurality of dosing facilities (4) for applying a substance (11), such as a plant protection product, a pesticide and/or a fertilizer, to the culture (5) is arranged, and wherein further sensors for characterizing the culture (5) are provided on the spray rodding (3), wherein the sensors are adjustably mounted to the spray rodding (3) with respect to a horizontal axis, so that the distance between the dosing facilities (4) and the sensors is changeable in the direction of traveling and can be adjusted to a value of 0.5 to 1.5 m.

6. The device according to claim 5, **characterized in that** the sensors each with respect to a horizontal axis are adjustably mounted transversely to the longitudinal axis of the spray rodding (3).

7. The device according to claim 5 or claim 6, **characterized in that** it has swiveling or extendible fixtures (8) that are mounted with one end (12) to the spray rodding (3) and have a sensor arranged on the other end (13).

8. The device according to any of claims 5 to 7, **characterized in that** the swivel or extension motion of the sensors can be performed by means of a hydraulic, electric, or pneumatic actuator (17).

9. The device according to claim 8, **characterized in that** the swiveling fixtures each have a hydraulic cylinder (17) the one end of which is pivotally attached to the spray rodding (3) or to the end (12) of the fixture (8) that is mounted to the spray rodding (3) and the other end of which is pivotally mounted to the fixture (8) in a distance from said end (13) of the fixture (8).

10. The device according to any of claims 5 to 9, **characterized in that** at least four sensors are provided, wherein the sensors are spaced approximately equidistant.

11. The device according to any of claims 5 to 10, **characterized in that** the sensors are arranged independent of the distance between them and the dosing facilities (4) such that their sending and/or receiving unit is substantially perpendicularly oriented toward the culture (5).

12. The device according to claim 11, **characterized in that** the ultrasonic sensors are rotatably supported in the fixture (8) about an axis extending through the fixture (8).

13. The device according to any of claims 5 to 12, **characterized in that** each sensor is connected to a separate evaluation unit (21).

14. The device according to any of claims 5 to 13, **characterized in that** the sensors are ultrasonic sensors (9), light reflecting sensors, cameras, or combinations thereof.

## Revendications

1. Procédure d'épandage d'une substance (11) comme un produit phytopharmaceutique, un pesticide et/ou un engrais sur des plantes (5) à l'aide d'un pulvérisateur (1) fixé à un support mobile (2) et présentant une tringlerie de pulvérisation (3) à laquelle sont fixés un certain nombre de dispositifs de dosage (4) pour la substance (11) et au moins quatre capteurs à ultrasons (9) disposés à distance identique l'un de l'autre, pendant le passage du support mobile (2) à l'aide des capteurs à ultrasons (9), des impulsions sonores étant émises cycliquement en direction des plantes (5) et les échos renvoyés par les plantes (5) et le sol (7) étant saisis, **caractérisée en ce que** la procédure comprend:
(a) la détermination cyclique de la distance entre les capteurs à ultrasons (9) et la surface (6) des plantes; et le réglage de la hauteur de la tringlerie de pulvérisation (3) lorsque la distance entre les capteurs à ultrasons (9) et la surface (6) des plantes s'écarte d'une valeur donnée; et en même temps
(b) la détermination cyclique de la biomasse en générant une valeur de biomasse qui est une cote pour la biomasse actuelle sur une zone qui est balayée par les capteurs à ultrasons (9); calcul de la quantité d'épandage de la substance (11) qui doit être épandue sur les plantes (5) de cette zone en générant au moins un signal de commande pour les dispositifs de dosage (4) et réglage de la quantité d'épandage de la substance (11) à l'aide des dispositifs de dosage (4) sur la base du ou des signaux de commande,
- la détermination cyclique de la distance entre les capteurs à ultrasons (9) et la surface (6) des plantes à l'étape (a) s'effectuant par les échos qui sont tout d'abord reçus dans le temps dans un premier cycle par les capteurs à ultrasons (9);
- la détermination cyclique de la biomasse dans un deuxième cycle s'effectuant à l'aide de tous les échos reçus dans le premier cycle par les capteurs à ultrasons (9); et
- pour chaque capteur à ultrasons dans chaque premier cycle, une valeur est calculée pour la distance entre le capteur à ultrasons et la surface des plantes et une valeur pour la distance du capteur à ultrasons par rapport au sol.

2. Procédure selon la revendication 1 **caractérisée en ce que** le calcul des valeurs de biomasse comprend la détermination de la distance des capteurs à ultrasons (9) par rapport à la surface (6) des plantes, la détermination de la distance des capteurs à ultrasons (9) par rapport au sol (7) et/ou la détermination des distances des capteurs à ultrasons (9) par rapport aux étages de feuille des plantes (5).

3. Procédure selon l'une des revendications précédentes **caractérisée en ce que** le procédé comprend la réalisation d'un premier et d'un deuxième cycles, le premier cycle étant exécuté de façon synchrone par chaque capteur à ultrasons (9) et les étapes comprenant:
(1a) émission d'une impulsion sonore en direction des plantes;
(1b) réception des échos de l'impulsion sonore sur une période déterminée (durée) en maintenant les valeurs mesures;
(1c) transformation des valeurs mesurées en distance;
(1d) calcul de la distance du capteur à ultrasons par rapport à la surface des plantes, de la distance du capteur à ultra-sons par rapport au sol et en option des distances du capteur à ultra-sons par rapport aux étages de feuilles à partir des distances, pour la détermination de la distance du capteur à ultrasons par rapport à la surface des plantes étant utilisés seulement les échos qui ont d'abord été reçus dans le temps par le capteur à ultrasons pendant la durée de réception et pour la détermination de la distance du capteur à ultrasons par rapport au sol et en option des distances du capteur à ultrasons par rapport aux étages de feuilles, tous les échos qui ont été reçus par le capteur à ultrasons pendant les durées de réceptions;
(1e) répétition des étapes (1a) à (1d) jusqu'à la fin du procédé;
et le deuxième cycle comprenant les étapes:
(2a) calcul d'au moins une valeur de hauteur pour le guidage de hauteur de la tringlerie de pulvérisation à partir des distances déterminées de tous les capteurs à ultra-sons par rapport à la surface des plantes,
(2b) calcul d'au moins une valeur de biomasse pour déterminer la quantité d'épandage de substance à partir des distances déterminées de tous les capteurs à ultra-sons par rapport à la surface des plantes, du sol et en option des étages de feuilles;
(2c) si la valeur calculée pour la distance de la tringlerie de pulvérisation par rapport à la surface des plantes s'écarte d'un valeur donnée, génération d'un ou de plusieurs signaux de commande pour le réglage de la hauteur de la tringlerie de pulvérisation, transfert du signal de commande pour le réglage de hauteur de la tringlerie de pulvérisation à un ou plusieurs éléments de réglage et modification de la hauteur de la tringlerie de pulvérisation;
(2d) si la quantité d'épandage de substance s'écarte d'une quantité d'épandage de substance réglée jusqu'à présent, génération d'un ou plusieurs signaux de commande pour les dispositifs de dosage pour régler la quantité d'épandage de substance, transfert du ou des signaux de commande à un ou plusieurs éléments de réglage pour réglage de la quantité d'épandage et modification de la quantité d'épandage des dispositifs de dosage et
(2e) répétition des étapes (2a) à (2d) jusqu'à la fin de la procédure.

4. Procédure selon l'une des revendications précédentes **caractérisée en ce que** chacun des capteurs à ultrasons (9) est associé à une unité d'évaluation (21) séparée.

5. Dispositif pour déterminer la biomasse de plantes et le guidage de hauteur de tringleries de pulvérisation (3), en particulier sur une machine agricole (2), en particulier pour effectuer une procédure selon les revendications 1 à 4, le dispositif comprenant un appareil de pulvérisation (1) avec une tringlerie de pulvérisation (3) à laquelle est placé un certain nombre de dispositifs de dosage (4) pour épandage d'une substance (11) comme un produit phytopharmaceutique, un pesticide et/ou un engrais sur les plantes (5) et de plus la tringlerie de pulvérisation (3) étant pourvue de capteurs pour caractériser les plantes (5), les capteurs étant fixés de façon réglable à la tringlerie de pulvérisation (3) en référence à un axe horizontal de façon que la distance entre les dispositifs de dosage (4) et les capteurs puisse se modifier dans le sens de la marche et être réglés sur une valeur de 0,5 à 1,5 m.

6. Dispositif selon la revendication 5 **caractérisé en ce que** les capteurs sont fixés de façon réglable respectivement en référence à un axe horizontal transversalement par rapport à l'axe longitudinal de la tringlerie de pulvérisation (3).

7. Dispositif selon la revendication 5 ou revendication 6 **caractérisé en ce qu'**il présente des supports (8) pivotables ou pouvant sortir dont une extrémité (12) est fixée à la tringlerie de pulvérisation (3) et un capteur est placé à son autre extrémité (13).

8. Dispositif selon l'une des revendications 5 à 7 **caractérisé en ce que** le mouvement de pivotement ou de sortie des capteurs peut s'effectuer à l'aide d'un élément de réglage (17) hydraulique, électrique ou pneumatique.

9. Dispositif selon la revendication 8 **caractérisé en ce que** les supports pivotables présentent respectivement un vérin hydraulique (17) dont une extrémité est placée de façon articulée à la tringlerie de pulvérisation (3) ou à l'extrémité (12) du support (8) qui est fixée à la tringlerie de pulvérisation (3) et dont l'autre extrémité est fixée de façon articulée au support (8) à une distance de cette extrémité (13) du support (8).

10. Dispositif selon l'une des revendications 5 à 9 **caractérisé en ce qu'**au moins quatre capteurs sont prévus, les capteurs étant à distance l'un de l'autre de façon quasi-équidistante.

11. Dispositif selon l'une des revendications 5 à 10 **caractérisé en ce que** les capteurs sont placés indépendamment de la distance entre eux et les dispositifs de dosage (4) de façon que leur unité d'émission et/ou de réception soit orientée essentiellement perpendiculairement par rapport aux plantes (5).

12. Disposition selon la revendication 11 **caractérisé en ce que** les capteurs à ultrasons sont logés dans le support (8) de façon à pouvoir pivoter autour d'un axe qui s'étend à travers le support (8).

13. Dispositif selon l'une des revendications 5 à 12 **caractérisé en ce que** chaque capteur est associé à une unité d'évaluation (21) séparée.

14. Dispositif selon l'une des revendications 5 à 13 **caractérisé en ce que** les capteurs sont des capteurs à ultrasons (9), des capteurs à réflexion lumineuse, des caméras ou des combinaisons d'eux.
